# EUROPÄISCHE PATENTSCHRIFT

(11) **EP 1 870 383 B1**
(45) Veröffentlichungstag und Bekanntmachung des Hinweises auf die Patenterteilung: **26.09.2018**
(21) Anmeldenummer: 07009391.9
(22) Anmeldetag: 10.05.2007
(51) Int. Cl.: C03C 3/066, C03C 3/04, C03C 8/06, C03C 17/04, C03C 8/14, C03C 8/22, C03C 8/04

(54) **Alkali- blei- und cadmiumfreie Glasfritte und deren Verwendung zur Herstellung keramischer Farben**
Glass frit free of alkaline, lead and cadmium and its use to produce coloured enamels.
Fritte de verre dépourvue d'alcalins, de plomb et de cadmium et son utilisation dans la fabrication d'émaux.

(30) Priorität: 23.06.2006 DE 102006028763
(43) Veröffentlichungstag der Anmeldung: 26.12.2007
(73) Patentinhaber: Schott AG, 55122 Mainz (DE)
(72) Erfinder: Storch, Alexander, 07747 Jena (DE); Kloss, Thomas, 07751 Jena (DE)
(74) Vertreter: Sawodny, Michael-Wolfgang

(56) Entgegenhaltungen:
- EP-A- 1 298 099
- SU-A1- 1 060 586
- US-A- 5 051 381

## Beschreibung

Die vorliegende Erfindung betrifft eine alkali-, blei- und cadmiumfreie Glasfritte und deren Verwendung zur Herstellung keramischer Farben.

Bekanntermaßen werden zur Dekoration von Glas- oder Glaskeramikartikeln keramische Farben verwendet, die eine oder mehrere Glasfritten und gegebenenfalls eine oder mehrere farbgebende Komponenten (Pigmente) enthalten. Weiterhin können Füllstoffe enthalten sein, die zur Verbesserung physikalischer und chemischer Eigenschaften der keramischen Farbe dienen.

Unter "Glasfritte" versteht man üblicherweise ein Zwischenprodukt bei der Herstellung von Glasschmelzen. Die Glasfritte ist ein krümelig-poröses Glas, welches durch das Abschrecken eines bei hohen Temperaturen erschmolzenen Rohstoffgemenges entstanden ist. Die Glasfritte wird als Rohstoff für die Herstellung von Emails verwendet. Die Emailherstellung erfolgt durch das Aufschmelzen der Glasfritte und zugegebener Komponenten, wie Farbpigmente oder Füllstoffe, auf ein Werkstück aus Metall oder Glas. Keramische Farben werden deshalb auch oft als Emails oder Glasemails bezeichnet.

In der vorliegenden Erfindung wird eine Glasfritte durch das Erschmelzen und anschließende Abschrecken einer Glasmasse hergestellt. Die erhaltene Glasfritte wird auf Partikelgrößen bevorzugt < 40 µm gemahlen und gegebenenfalls mit den Zusatzstoffen (Pigmente, Füllstoffe) vermischt. Das Pulver wird in der Regel mit einem Suspendiermittel, z.B. Siebdrucköl, angepastet und bevorzugt mittels Siebdruck auf den zu dekorierenden Gegenstand aufgebracht. Anschließend erfolgt der Einbrennprozess, wobei die Glasfritte erweicht und einen Glasfluss auf der Trägersubstratoberfläche bildet, in dem die Zusatzstoffe eingebettet und auf dem Trägersubstrat fixiert werden. Eine ausreichende Haftung der keramischen Farbe muss damit unterhalb der Verformungstemperatur des Trägersubstrats stattfinden. Deshalb ist es insbesondere für die Dekoration beispielsweise von Borosilicatgläsern mit Transformationstemperaturen von ca. 530°C notwendig, niedrigschmelzende Glasfritten zu verwenden, die unterhalb von 750°C einbrennbar sind.

Bisher enthalten die auf Borosilicatgläsern eingebrannten Glasfritten einen hohen Bleigehalt, der zur Senkung der Einbrenntemperatur eingesetzt wird. Die toxischen Eigenschaften von bleihaltigen Glasfritten erfordern hinsichtlich des Umgangs und der Entsorgung der mit ihnen dekorierten Produkte jedoch eine gesonderte Behandlung. Somit besteht durch neue Richtlinien für die Verwendung von Blei in Gläsern ein steigender Bedarf an bleifreien Glasfritten.

Der Schmelzbereich und die thermische Ausdehnung einer Glasfritte sind über die Form der Potenzialenergiekurve der chemischen Bindungen im Glas miteinander verknüpft. Je höher die Energieschwelle ist, die überwunden werden muss, um chemische Bindungen in einer Substanz aufzubrechen, desto höher ist die Schmelztemperatur und niedriger die thermische Ausdehnung dieser Substanz. Deshalb führt eine niedrige thermische Ausdehnung zu einer hohen Erweichungstemperatur. Da die chemischen Bindungen niedrigschmelzender Glasfritten schwach sind, wird ein lonenaustausch durch angreifende Substanzen erleichtert. Die chemische Beständigkeit nimmt dadurch ab. Diese Zusammenhänge führen dazu, dass die Senkung des Einbrennbereichs einer Glasfritte, durch die Änderung der chemischen Zusammensetzung der Glasfritte, die thermische Ausdehnung erhöht und die chemische Beständigkeit verringert. Als Einbrennbereich einer Glasfritte wird der Temperaturbereich verstanden, bei dem die aufschmelzende Glasfritte in der Regel Viskositäten von 10⁴-10^{7,6} dPa s erreicht. Dieser Viskositätsbereich ermöglicht eine gute Benetzung des zu dekorierenden Trägermaterials, so dass eine gute Haftfestigkeit des Dekors gegeben ist. Niedrigere Viskositäten der keramischen Farbe würden zu unscharfen Dekoren führen und höhere zu einer unzureichenden Haftfestigkeit, so dass es vorteilhaft ist, wenn der beschriebene Viskositätsbereich eingestellt wird.

Aufgrund der geschilderten Zusammenhänge ist es demnach äußerst schwierig eine geeignete Zusammensetzung für eine Glasfritte mit den gewünschten Eigenschaften bereitzustellen.

Des Weiteren ist die Biegebruchfestigkeit eines dekorierten Substrats vorwiegend von den sich während der Abkühlung aufbauenden Spannungen zwischen keramischer Farbe und Trägersubstrat abhängig. Die Ursachen für die Spannungen sind in der unterschiedlichen thermischen Ausdehnung und Elastizität von Trägersubstrat und keramischer Farbe begründet. Eine hohe Differenz der thermischen Ausdehnungen führt zur Bildung von Mikrorissen, die den Elastizitätsmodul und die Temperaturschockbeständigkeit des dekorierten Substrats senken.

Die Haftung der aufschmelzenden Glasfritte am Trägersubstrat wird durch Lösungs- und Diffusionsprozesse beim Einbrennen hervorgerufen. Dabei findet ein lonenaustausch statt, dessen Ursache das Konzentrationsgefälle zwischen Glasfluss (aufgeschmolzene Glasfritte) und Trägersubstrat ist. Besonders Ionen mit kleinen Radien und schwacher Bindung im Glasnetzwerk, wie zum Beispiel Li⁺ oder Na⁺, diffundieren sehr schnell und tief in das Trägersubstrat ein, während große Ionen, wie Pb²⁺ oder Bi³⁺, nur sehr kurze Strecken zurücklegen. Insbesondere beeinflusst Li⁺ das Trägersubstrat sehr stark. Durch Verwendung von Li⁺-lonen lassen sich niedrigschmelzende Glasfritten mit relativ geringen thermischen Ausdehnungen herstellen. Jedoch diffundiert das mobile Ion beim Einbrennprozess in das Trägersubstrat, während Na⁺ aus dem Trägersubstrat in den Glasfluss wandert. Dadurch wird die thermische Ausdehnung im Trägersubstrat erniedrigt und im Email erhöht.

In der Literatur gibt es zahlreiche Vorschläge, eine bleifreie Glasfritte herzustellen. Dabei kann bevorzugt mit einer Glasfritte des B₂O₃-SiO₂-Systems eine niedrige thermische Ausdehnung erreicht werden. In dieses System werden Metalloxide als Flussmittel eingebracht, die eine Senkung der Einbrenntemperatur bei möglichst geringer Erhöhung der thermischen Ausdehnung erreichen sollen. Bei bisherigen keramischen Farben werden im Wesentlichen Alkalioxide, wie Na₂O und Li₂O, mit den Oxiden Bi₂O₃ oder ZnO kombiniert.

Zahlreiche Patente, wie die EP 0 895 969 B1, die US 5,203,902, die US 6,387,513 B1, die EP 0 987 227 A1 oder die US 5,643,636, beschreiben die Herstellung von Glasfritten im (Li₂O, Na₂O, K₂O)-Bi₂O₃-B₂O₃-SiO₂-System. Allerdings sind die notwendigen Flussmittelgehalte zur Herstellung von unter 750°C einbrennbaren Glasfritten so hoch, dass der thermische Ausdehnungskoeffizient bei diesen Zusammensetzungen stets > 6,5∗10⁻⁶ K⁻¹ ist. Diese Glasfritten werden gewöhnlich zur Dekoration von Kalknatron-Silicatgläsern eingesetzt.

Im europäischen Patent EP 0 723 941 B1 ist eine Glaszusammensetzung beschrieben, die es ermöglicht, im K₂O-TiO₂-B₂O₃-SiO₂-System eine homogene Fritte mit TiO₂-Konzentrationen von 15-30 Mol-% zu erschmelzen. Allerdings sind hierfür K₂O-Konzentrationen von 10 Mol-% notwendig, die wiederum eine starke Erhöhung des thermischen Ausdehnungskoeffizienten erzeugen.

Bei der Verwendung von ZnO als Flussmittel benötigt man generell höhere Alkalioxidgehalte, da ZnO gegenüber Bi₂O₃ erst bei höheren Temperaturen als aktives Flussmittel wirkt.

Die Patente EP 0 728 710 A1, EP 0 987 227 A1, JP 2002-179435 und DE 19 512 847 C1 beschreiben Glasfritten des (Li₂O, Na₂O, K₂O)-ZnO-B₂O₃-SiO₂-Systems, die bezüglich ihrer thermischen Ausdehnung an Kalknatron-Silicatgläser angepasst sind. Auch durch fluorhaltige Rohstoffe kann die Viskosität hoch ZnOhaltiger Gläser herabgesetzt werden. Deshalb sind diese Gläser in der Patentliteratur oft mit Fluorgehalten von bis zu 8 Mol-% beschrieben (siehe beispielsweise EP 1 298 099 A1 oder EP 0 558 942 B1). Allerdings muss berücksichtigt werden, dass beim Schmelzprozess das sehr korrosive Gas Fluorwasserstoff entsteht, welches das Feuerfestmaterial des Ofens angreift. Im Glas verbleibendes Fluorid kann während des Einbrennprozesses zudem zur Blasenbildung in der keramischen Farbe führen und ,Nadelstiche' in der Farboberfläche hervorrufen. Das ZnO-B₂O₃-SiO₂-System ist für die Herstellung thermisch entglasbarer Glaslote bekannt. Der thermische Ausdehnungskoeffizient der Gläser beträgt (4 bis 5)∗10⁻⁶ K⁻¹ und wird durch die Kristallisation von Zinkborat oder Willemit verringert. Die Kristallisationen führen zu einer Verschlechterung der Benetzbarkeit der Unterlage, da die Kristalle die Viskosität der Schmelze so stark erhöhen, dass der Fließprozess zum Erliegen kommt. Ein Glas aus diesem System ist für die Herstellung einer keramischen Farbe durch die geringe Fließbarkeit im Grunde ungeeignet. Hierfür muss die Kristallisationsneigung des Glases herabgesetzt werden. Im Patent US 3,900,330 wird die Zugabe von 0,1-25 Gew.-% Ta₂O₅ beschrieben, die eine Senkung der Kristallisationstendenz bewirkt. Ta₂O₅ vergrößert den Glasbildungsbereich im Zinkborosilicatsystem und hat keinen erhöhenden Einfluss auf den thermischen Ausdehnungskoeffizienten und die Einbrenntemperatur. Allerdings sollte aufgrund der hohen Kosten auf Ta₂O₅ verzichtet werden.

Das deutsche Patent DE 69 316 165 T2 beschreibt Glasfritten des Bi₂O₃-ZnO-B₂O₃-SiO₂-Systems. In diesem Patent wurde die Kristallisationsneigung im Zinkborosilicatsystem durch hohe Bi₂O₃- und niedrige SiO₂-Gehalte verringert, was eine Erhöhung der thermischen Ausdehnung zur Folge hat. Somit sind diese Glaszusammensetzungen bevorzugt für Kalknatron-Silicatgläser geeignet.

Im Patent US 3,883,358 werden Kupferaluminoboratgläser mit CuO-Gehalten von 27-60 Gew.-% beschrieben, die sich durch niedrige thermische Ausdehnungen von (3,5 bis 4,3)∗10⁻⁶ K⁻¹ und Erweichungstemperaturen von 570-665°C auszeichnen. Somit kann auch CuO als Flussmittel eingesetzt werden, wobei geringe thermische Ausdehnungen möglich sind. Allerdings ist die Fließbarkeit der Gläser unterhalb von 750°C für die Herstellung einer geeigneten Glasfritte für keramische Farben viel zu gering.

Die für eine Glasfritte geforderte niedrige Einbrenntemperatur von < 750°C führt zu einer höheren thermischen Ausdehnung der Glasfritte gegenüber dem Trägersubstrat. Kommerziell erhältliche bleifreie keramische Farben, insbesondere die für die Dekoration von Borosilicatgläsern angebotenen, haben bestenfalls minimale thermische Ausdehnungen von etwa 6∗10⁻⁶ K⁻¹. Jedoch besitzen Borosilicatgläser in der Regel einen thermischen Ausdehnungskoeffizienten von ca. (3 bis 4)*10⁻⁶ K⁻¹. Durch die Differenz der thermischen Ausdehnungskoeffizienten zwischen der verwendeten Glasfritte und dem Trägersubstrat und auf Grund der auftretenden Diffusion während des Einbrennprozesses bilden sich in der keramischen Farbe während der Abkühlung Zugspannungen aus. Bei großen Zugspannungen in der keramischen Farbe kann es zur Bildung von Rissen kommen, die bis in das Trägersubstrat hinein reichen. Auch kann die keramische Farbe abplatzen, wobei große Bruchstücke an der Oberfläche des Trägersubstrats herausgerissen werden. Die Biegebruchfestigkeiten dieser dekorierten Glas- oder Glaskeramikartikel sind für die meisten Anwendungen demnach völlig unzureichend.

Die Aufgabenstellung der vorliegenden Erfindung besteht somit darin, Glasfritten bereitzustellen, die zu bleifreien keramischen Farben weiterentwickelt werden können, welche die oben geschilderten Nachteile, die aus dem Stand der Technik bekannt sind, nicht oder nur in sehr untergeordnetem Maße zeigen. Diese sollten durch ihre niedrigere thermische Ausdehnung und ihr niedrigeres Diffusionsvermögen im Vergleich mit bisher bekannten Glasfritten bzw. keramischen Farben zu einer deutlichen Verringerung auftretender Spannungen zwischen keramischer Farbe und Trägersubstrat führen.

Die zuvor geschilderte Aufgabe wird gelöst durch Bereitstellen einer alkali-, blei- und cadmiumfreien Glasfritte mit einem thermischen Ausdehnungskoeffizienten alpha im Temperaturbereich von 20 bis 300°C von weniger als 6,5∗10⁻⁶ K⁻¹ und einer Transformationstemperatur T_{g} < 550°C, welche die nachfolgende Glaszusammensetzung aufweist oder hieraus besteht:
35 bis 70 Mol-% ZnO
20 bis 38 Mol-% B₂O₃
6 bis 20 Mol-% SiO₂
0,1 bis 30 Mol-% RO (RO ist CuO und/oder MgO)
0 bis 20 Mol-% Bi₂O₃
0 bis 5 Mol-% Al₂O₃
0 bis 5 Mol-% CoO
0 bis 5 Mol-% Fe₂O₃
0 bis 10 Mol-% MnO
0 bis 5 Mol-% TiO₂
0 bis 5 Mol-% ZrO₂
0 bis < 6 Mol-% F, vorzugsweise 0 bis 5 Mol-% F,
wobei die Summe aus CoO, Fe₂O₃ und MnO 15 Mol-% nicht übersteigt und CuO-freie Glasfritten einen Bi₂O₃-Gehalt von 0,1 bis 20 Mol-% aufweisen sowie gegebenenfalls Zusatzstoffe in geeigneten Mengen.

Die erfindungsgemäßen Glasfritten zeigen eine gewünscht niedrige thermische Ausdehnung und geringes Diffusionsvermögen im Vergleich mit bisher bekannten Glasfritten. Hierdurch werden die Spannungen zwischen einer hieraus zu erzeugenden keramischen Farbe und einem Trägersubstrat deutlich verringert. Somit können höhere Biegebruchfestigkeiten erreicht und ein Abplatzen der keramischen Farbe auf einem Trägersubstrat, beispielsweise von emaillierten Glas- oder Glaskeramikartikeln, vermieden werden. Somit wird eine wesentliche Verbesserung der geforderten Eigenschaften erreicht.

Demzufolge werden erfindungsgemäß alkali-, blei- und cadmiumfreie Glasfritten der obigen Glaszusammensetzungen bereitgestellt, die thermische Ausdehnungskoeffizienten alpha < 6,5∗10⁻⁶ K⁻¹ und Transformationstemperaturen T_{g} < 550°C aufweisen und zur Herstellung von keramischen Farben für die vorzugsweise großflächige Dekoration von Glassubstraten, insbesondere solche auf Basis von Borosilicatglas und/oder Glaskeramiksubstraten, insbesondere solche auf Basis von Borosilicatglas, beispielsweise mit thermischen Ausdehnungskoeffizienten alpha < 6,5∗10⁻⁶ K⁻¹ geeignet sind.

Besonders bevorzugt werden das Material des Trägersubstrats und die Zusammensetzung der Glasfritte bzw. keramischen Farbe daher derart ausgewählt, dass eine möglichst geringe Differenz zwischen den thermischen Ausdehnungskoeffizienten der verwendeten Glasfritte bzw. der keramischen Farbe und dem Trägersubstrat vorliegt. Erfindungsgemäß werden somit besonders bevorzugt niedrigausdehnende Glasfritte bzw. keramische Farbe (mit niedrigem thermischen Ausdehnungskoeffizienten) und niedrigausdehnendes Trägersubstrat (mit niedrigem thermischen Ausdehnungskoeffizienten) kombiniert.

Da die erfindungsgemäßen Glasfritten mit den hieraus erzeugten keramischen Farben der Erfindung in engem Zusammenhang stehen, kann man beide Ausführungsformen nicht ohne weiteres voneinander getrennt betrachten, so dass es sich von selbst versteht, dass die vorliegend beschriebenen Angaben und Aussagen in der Regel auf beide Ausführungen gleichermaßen zutreffen, auch wenn dies nicht in jedem Einzelfall erwähnt wird.

Durch Einbrennen der erfindungsgemäßen Glasfritten auf einem Trägersubstrat können damit keramische Farben mit den gewünschten Eigenschaften erhalten werden. Vorzugsweise weisen die thermischen Ausdehnungskoeffizienten alpha der Glasfritte bzw. der hieraus erzeugten alkali-, blei- und cadmiumfreien keramischen Farben einen Wert < 6,5∗10⁻⁶ K⁻¹ auf, bevorzugt < 6,0∗10⁻⁶ K⁻¹, noch bevorzugter < 5,5∗10⁻⁶ K⁻¹, insbesondere < 5,0∗10⁻⁶ K⁻¹ und liegen ganz besonders bevorzugt im Bereich von etwa 3 bis etwa 4,5∗10⁻⁶ K⁻¹.

Wenn man eine keramische Farbe herstellt, die aus Glasfritte und Zusatzstoffen (Farbpigmente, Füllstoffe) besteht bzw. diese enthält, kann sich die thermische Ausdehnung der keramischen Farbe von der der Glasfritte entsprechend des verwendeten Zusatzstoffes unterscheiden. Wie in den Beispielen dargestellt, hat der Füllstoff entsprechend seiner thermischen Ausdehnung und zugegebenen Menge einen Einfluss auf den thermischen Ausdehnungskoeffizienten der keramischen Farbe. Durch die Auswahl geeigneter Zusatzstoffe kann die thermische Ausdehnung von der Glasfritte zur keramischen Farbe weiter gesenkt werden.

Die Transformationstemperatur T_{g} ändert sich nicht oder nur gering durch die Zugabe von Zusatzstoffen. Allerdings wird das Glas, länger'. Die Viskosität des reinen Glasflusses (geschmolzene Glasfritte) sinkt oberhalb der Transformationstemperatur T_{g} mit steigender Temperatur schneller als die der keramischen Farbe (Glasfritte + Zusatzstoffe). Dabei sollen unter den in der keramischen Farbe enthaltenen Zusatzstoffen stabile Komponenten verstanden werden, die während des Einbrennprozesses nicht oder nur gering in Wechselwirkung mit dem Glasfluss treten. Aus diesem Grund wird in der Regel die Einbrenntemperatur, die für eine gute Haftung der keramischen Farbe auf dem Trägersubstrat notwendig ist, mit zunehmendem Zusatzstoffgehalt in der keramischen Farbe erhöht.

Die Einbrenntemperaturen zur Herstellung der keramischen Farbe betragen < 750°C, sind vorzugsweise < 700°C, und noch bevorzugter, insbesondere bei längeren Einbrennzeiten von ca. 15 min, liegen die Einbrenntemperaturen < 650°C.

Vorzugsweise besteht eine vorgefärbte Glasfritte aus der nachfolgenden Glaszusammensetzung:
39 bis 60 Mol-% ZnO
24 bis 28 Mol-% B₂O₃
11 bis 15 Mol-% SiO₂
10 bis 20 Mol-% CuO
0 bis 10 Mol-% Bi₂O₃
0 bis 3 Mol-% Al₂O₃
0 bis 2 Mol-% CoO
0 bis 2 Mol-% Fe₂O₃
0 bis 10 Mol-% MnO,
wobei die Summe aus CoO, Fe₂O₃ und MnO 10 Mol-% nicht übersteigt.

Eine "vorgefärbte" Glasfritte bedeutet im Rahmen der Erfindung, dass die verwendete Glasfritte bereits eine ausgewählte und definiert eingestellte Farbe aufweist. Der Begriff "Farbe" soll hier möglichst weit verstanden werden und jede dem Fachmann bekannte Färbung einschließen. Auch weiß soll als Farbe verstanden werden. Die vorgefärbte Glasfritte kann undurchsichtig, durchscheinend oder transparent sein. Übergänge zwischen den geschilderten Zuständen sind ebenfalls möglich. Zudem können gegebenenfalls zusätzliche farbgebende Komponenten als Zusatzstoffe, wie beispielsweise Pigmente, in definierten geeigneten Mengen in der vorgefärbten Glasfritte enthalten sein.

Im Gegensatz zu einer vorgefärbten Glasfritte kann die Glasfritte auch farblos sein. Eine farblose Glasfritte weist bevorzugt die folgende Glaszusammensetzung auf oder besteht hieraus:
39 bis 60 Mol-% ZnO
24 bis 28 Mol-% B₂O₃
11 bis 15 Mol-% SiO₂
5 bis 10 Mol-% MgO
0 bis 10 Mol-% Bi₂O₃
0 bis 3 Mol-% Al₂O₃.

Die oben beschriebenen Glasfritten sind im Wesentlichen frei von unerwünschten Komponenten, wie Li₂O, Na₂O, K₂O, PbO und CdO, d.h. diese Verbindungen sind bis auf unvermeidbare Verunreinigungsgehalte nicht vorhanden. Vorzugsweise nicht enthalten sind weiterhin P₂O₅, BaO und Ta₂O₅.

Als Glasrohstoffe werden zur Herstellung der Glasfritte bevorzugt Oxide verwendet. Die Komponenten B₂O₃, Al₂O₃, MgO und F werden durch die Rohstoffe Borsäure (H₃BO₃), Tonerdehydrat (Al(OH)₃), Magnesiumhydroxid (Mg(OH)₂) und Zinkfluorid (ZnF₂) in den Glasansatz eingebracht. Der ZnO-Gehalt von 35-70 Mol-% in der Glaszusammensetzung ist erforderlich, da niedrigere ZnO-Gehalte zur Entmischung der Schmelze führen, so dass keine homogenen Gläser herstellbar sind. ZnO-Gehalte > 70 Mol-% führen zu einer sehr schnellen Kristallisation während des Einbrennprozesses, was zu einer unzureichenden Benetzung des Trägersubstrats durch den Glasfluss führt.

Der B₂O₃-Gehalt beträgt mindestens 20 Mol-%, da Glaszusammensetzungen mit geringeren Gehalten zu hohe Einbrenntemperaturen erfordern und zur starken Kristallisation neigen. Glaszusammensetzungen mit B₂O₃-Gehalten > 38 Mol-% sind durch den hohen thermischen Ausdehnungskoeffizienten und die schlechte Säurebeständigkeit generell nicht für Glasfritten zur Herstellung niedrigausdehnender keramischer Farben geeignet.

Die Glaszusammensetzung enthält mindestens 6 Mol-% SiO₂, da niedrigere Gehalte eine schlechte hydrolytische Beständigkeit aufweisen. SiO₂-Gehalte > 20 Mol-% führen zu einer starken Erhöhung der Einbrenntemperatur und der Kristallisationsneigung.

CuO wird zur Senkung der Kristallisationstendenz und der thermischen Ausdehnung eingesetzt und ruft in Zinkborosilicatgläsern eine Grünfärbung hervor.

MgO wird zur Senkung der Kristallisationsneigung eingesetzt. Da MgO den thermischen Ausdehnungskoeffizienten erhöht, ist der Gehalt in der Glaszusammensetzung vorzugsweise niedrig gewählt.

Durch Bi₂O₃ wird die Einbrenntemperatur gesenkt. Die Bi₂O₃-Konzentration ist, aufgrund des steigenden thermischen Ausdehnungskoeffizienten mit zunehmendem Gehalt im Glas, vorzugsweise auf höchstens 20 Mol-% begrenzt.

Al₂O₃ senkt die Kristallisationsneigung, erhöht aber die Einbrenntemperatur bei Gehalten > 5 Mol-% zu stark, so dass in der erfindungsgemäßen Glasfritte bevorzugt 5 Mol-% oder weniger vorhanden sind.

Die Oxide CoO, Fe₂O₃ und MnO können zur Färbung der Glasfritte eingesetzt werden. Besonders in den CuO-haltigen Glasfritten können durch die Zugabe der färbenden Oxide stark absorbierende Glasfritten hergestellt werden, die auch für schwarze Glasflüsse geeignet sind. Die Gehalte von CoO, Fe₂O₃ und MnO in der Glaszusammensetzung werden aufgrund einer zu großen Erhöhung des thermischen Ausdehnungskoeffizienten auf maximal 15 Mol-% beschränkt.

TiO₂ und ZrO₂ erhöhen die chemische Beständigkeit und die Einbrenntemperatur der Glasfritte, so dass die Gehalte jeweils nicht höher als 5 Mol-% sein sollten.

Der Fluorgehalt in der Glasfritte sollte aus den bereits genannten Gründen unterhalb 6 Mol-% liegen, vorzugsweise nicht höher als 5 Mol-% sein. Bevorzugt wird Fluor in der Glaszusammensetzung jedoch gänzlich vermieden.

Vorteilhafterweise können erfindungsgemäß zur Erhöhung der Biegebruchfestigkeit der hergestellten festhaftenden keramischen Farben insbesondere für Trägersubstrate auf Basis von Borosilicatgläsern spezielle Zusatzstoffe in definierten geeigneten Mengen zugegeben werden:
Nach einer besonders bevorzugten erfindungsgemäßen Ausführungsform wird zur Senkung der thermischen Ausdehnung und Erhöhung der Biegebruchfestigkeit der pigmentierten oder unpigmentierten Glasfritten über 0 bis maximal 30 Gew.-% ein oder mehrere der nachfolgenden Zusatzstoffe, ausgewählt aus der Gruppe, bestehend aus Zinnoxid (SnO₂), Spodumen (LiAlSi₂O₆), Petalit (LiAlSi₄O₁₀) und/oder Nioboxid (Nb₂O₅), zugegeben.

Besonders bevorzugt ist es ebenfalls, wenn zur Erhöhung der Biegebruchfestigkeit der keramischen Farben 0,1 bis 30 Gew.-% kristallisierbares Nioboxid (Nb₂O₅) und 0 bis 30 Gew.-% Pigmente zur Herstellung der keramischen Farbe in die Glasfritte zugegeben werden.

Selbstverständlich können in den Glaszusammensetzungen der erfindungsgemäßen Glasfritten auch weitere übliche Zusatzstoffe enthalten sein. Die Zusatzstoffe sind im Rahmen der Erfindung nicht besonders beschränkt, sofern diese Zusatzstoffe vom Glasfluss nicht oder nur geringfügig angegriffen werden. Besonders bevorzugt werden Zusatzstoffe, besonders Füllstoffe (die Farbpigmente haben meistens thermische Ausdehnungen > 6,5*10⁻⁶ K⁻¹), ausgewählt, die niedrigausdehnend sind, d.h. einen niedrigen thermischen Ausdehnungskoeffizienten aufweisen. Ein niedriger thermischer Ausdehnungskoeffizient liegt in der vorliegenden Erfindung bei einem Wert < 6,5∗10⁻⁶ K⁻¹.

### Beispielhafte Zusatzstoffe sind:

Füllstoffe, wie Petalit (LiAlSi₄O₁₆), Spodumen (LiAlSi₂O₆), β-Eukryptit (LiAlSiO₄), Nioboxid (Nb₂O₅), Zinnoxid (SnO₂), Cordierit (Mg₂Al₄Si₅O₁₈), CERAN® (SCHOTT), Zirkon (ZrSiO₄) und Quarzglas (SiO₂), niedrigausdehnenden Glaskeramiken aus dem Dreiphasensystem Li₂O-Al₂O₃-SiO₂ mit einem thermischen Ausdehnungskoeffizienten alpha im Temperaturbereich von 20 bis 300°C von weniger als 3,0∗10⁻⁶ K⁻¹, bevorzugt < 2,5∗10⁻⁶ K⁻¹, noch bevorzugter < 2,0∗10⁻⁶ K⁻¹, insbesondere bevorzugt < 1,5∗10⁻⁶ K⁻¹, ganz besonders bevorzugt im Bereich von etwa 0 bis etwa 1,0∗10⁻⁶ K⁻¹, die weitere Komponenten, wie Na₂O, K₂O, TiO₂, ZrO₂, Sb₂O₃, BaO, SrO, ZnO, CaO, MgO, B₂O₃, SnO, V₂O₅, P₂O₅, F, mit Gehalten <10 Mol-% enthalten können.

Bei CERAN® (Schott) handelt es sich um eine niedrigausdehnende Glaskeramik aus dem Dreiphasensystem Li₂O-Al₂O₃-SiO₂, wie beispielsweise aus Physik Journal 3 (2004) Nr. 12, Seite 56, Physik im Alltag "Keramik mit Durchblick" beschrieben. Mögliche Zusammensetzungen von CERAN sind beispielsweise auch in der EP 0220233A1 beschrieben.

Pigmente, insbesondere farbige anorganische oxidische Verbindungen, beispielsweise Titanoxid (TiO₂), Spinelle (zum Beispiel Cu-Cr-Spinelle, wie CuCr₂O₄), dotierter Zirkon (ZrSiO₄ : Pr, V, Fe), Baddeleyit (ZrO₂) und dotierter Hämatit (Fe₂O₃ : Cr).

Diese werden in geeigneten vordefinierten Mengen zugesetzt; die Menge hängt vom beabsichtigten Anwendungsfall ab und ist dem Fachmann entweder bekannt oder durch einfache Optimierung leicht erhältlich.

Als Faustregel kann man angeben, dass etwa 5 bis etwa 40 Gew.-% Zusatzstoffe in der Glasfritte eingesetzt werden. Bevorzugt kommen etwa 10 bis etwa 20 Gew.-% Füllstoffe, etwa 1 bis etwa 20 Gew.-% Pigmente und etwa 0 bis etwa 10 Gew.-% andere Zusatzstoffe als Pigmente oder Füllstoffe zum Einsatz.

Die erfindungsgemäßen Glasfritten lassen sich überraschenderweise bereits bei Einbrenntemperaturen < 650°C zu einer glatten Glasschicht aufschmelzen, die einen thermischen Ausdehnungskoeffizienten von < 6,5∗10⁻⁶ K⁻¹, vorzugsweise von < 6∗10⁻⁶ K⁻¹, noch bevorzugter < 5,5∗10⁻⁶ K⁻¹, insbesondere bevorzugt < 5,0∗10⁻⁶ K⁻¹ aufweist, ganz besonders bevorzugt im Bereich von etwa 3 bis etwa 4,5∗10⁻⁶ K⁻¹ liegt. Durch die Vermeidung stark diffundierender Komponenten, wie Li₂O oder Na₂O, kann der Spannungsaufbau zwischen dem eingebrannten Glasfluss und dem Trägersubstrat kontrolliert werden. Die Rissbildung kann dadurch deutlich herabgesetzt und die Biegebruchfestigkeit wesentlich erhöht werden.

Durch eine geeignete Pigmentierung der vorgefärbten Glasfritten lassen sich bereits mit niedrigen Pigmentgehalten schwarze keramische Farben herstellen, die nach dem Einbrennprozess bei geringen Schichtdicken, zum Beispiel von 10-20 µm, ein ausgezeichnetes Deckvermögen auf farblosem Borosilicatglas aufweisen. Der Pigmentgehalt liegt für die Herstellung einer schwarzen keramischen Farbe beispielsweise im Bereich von etwa 5 bis etwa 30 Gew.-%.

Die Zugabe von niedrigausdehnenden Füllstoffen, wie Petalit oder Nb₂O₅, in die erfindungsgemäßen Glasfritten ermöglicht die Herstellung gut haftender keramischer Farben, die eine hohe Biegebruchfestigkeit der dekorierten Trägersubstrate, wie Glas- und Glaskeramikartikel, gewährleisten, die vorzugsweise ebenfalls eine niedrige thermische Ausdehnung aufweisen.

Für eine gute Haftung der keramischen Farbe ist, wie in dem Patent DE 42 41 411 C2, auch die Zugabe von Glimmerplättchen als Füllstoff möglich, dessen Offenbarung in die vorliegende Beschreibung durch Bezugnahme vollumfänglich einbezogen wird. Dadurch wird die Elastizität der keramischen Farbe verbessert. Allerdings können Glimmerplättchen unerwünschte Farbeffekte durch starke Reflexionen hervorrufen und bilden aufgrund der eingesetzten Partikelgröße (Durchmesser 20-40 µm) raue Dekoroberflächen, so dass die Zugabe nur in Einzelfällen von Vorteil sein kann.

Die erfindungsgemäße Glasfritte kann als, gegebenenfalls vorgefärbte, Basisfritte zur Herstellung keramischer Farben, zum Beispiel schwarzer keramischer Farbe, für die Dekoration von Trägersubstraten Verwendung finden. Die erfindungsgemäßen Glaszusammensetzungen ermöglichen je nach Auswahl der Zusammensetzung, wie oben in Einzelheiten beschrieben, ebenfalls eine kristallisierbare Glasfritte bereitzustellen, die als Basisfritte für die Dekoration eines Trägersubstrats verwendet werden kann. Die Kristallisation der Glasfritte verhindert ein Ankleben der keramischen Farbe beim Ablösen der Form nach dem Formgebungsprozess ('antistick effect').

Der Begriff "Dekoration" soll erfindungsgemäß möglichst weit ausgelegt werden und bedeutet jede Möglichkeit, ein Trägersubstrat mit einer keramischen Farbe zu versehen, zum Beispiel in Form einer Schicht, Teilschicht, (Teil-)Strukturierung Abbildung, Musterung, Beschriftung oder dergleichen. Die Dekoration kann aus rein ästhetischen Aspekten zur Erzielung eines gewünschten Designs und/oder Färbung oder auch zur Unterstützung bestimmter technischer Funktionen, beispielsweise für Markierungen, vorhanden sein.

Das Trägersubstrat ist im Rahmen der Erfindung nicht besonders beschränkt. Es kann ein beliebiger Gegenstand nahezu beliebiger Form und Größe sein. Es kann auch ein zu biegendes oder bereits gebogenes Trägersubstrat verwendet werden. Bevorzugt wird ein Glas- und/oder Glaskeramiksubstrat eingesetzt. Ganz besonders bevorzugt ist das Glas oder die Glaskeramik auf Basis eines Borosilicatglases. Das Trägersubstrat kann vollständig oder teilweise aus Glas und/oder Glaskeramik aufgebaut sein. Es kann vollständig oder nur teilweise mit der aus der erfindungsgemäßen Glasfritte erzeugten keramischen Farbe versehen sein. Vorzugsweise wird für das Trägersubstrat ein Material mit niedrigem thermischen Ausdehnungskoeffizienten verwendet (hier bezeichnet als "niedrigausdehnend"). Bevorzugt liegt der thermische Ausdehnungskoeffizient < 6,5∗10⁻⁶ K⁻¹, bevorzugter < 6,0∗10⁻⁶ K⁻¹, noch bevorzugter < 5,5∗10⁻⁶ K⁻¹, insbesondere bevorzugt < 5,0∗10⁻⁶ K⁻¹, ganz besonders bevorzugt im Bereich von etwa 3 bis etwa 4,5∗10⁻⁶ K⁻¹.

Bei einem Trägersubstrat in Form einer Glaskeramik kann das Einbrennen des Dekors üblicherweise während der Keramisierung durchgeführt werden. Die Glasfritte wird zusammen mit den gegebenenfalls vorhandenen Zusatzstoffen direkt auf das Grünglas aufgebracht und während des Keramisierungsverfahrens eingebrannt.

Die Erfindung betrifft auch ein Verfahren zur Herstellung einer Glasfritte, wobei die bereits beschriebene Glasfritte, die eine der erfindungsgemäßen Glaszusammensetzungen aufweist oder hieraus besteht, bei einer Temperatur im Bereich von 1000 bis 1300°C aufgeschmolzen wird, die Schmelze abgeschreckt und das erhaltene Material gemahlen wird. Nach einer bevorzugten Ausführungsform können die bereits beschriebenen Zusatzstoffe in den definierten Mengen vor, während oder nach dem Mahlen zugegeben werden. Besonders bevorzugt werden die Zusatzstoffe jedoch während dem Mahlen zugegeben.

Gegenstand der Erfindung ist auch die aus der Glasfritte erhältliche alkali-, blei- und cadmiumfreie keramische Farbe. "Keramische Farbe" soll verstanden werden als vollflächiger oder teilflächiger Auftrag, der farbig sein kann, also eine oder mehrere Farben aufweist (oder auch weiß) oder farblos sein kann. Die keramische Farbe kann undurchsichtig, durchscheinend oder transparent sein. Übergänge zwischen den geschilderten Zuständen sind ebenfalls möglich. Es können ein oder mehrere Glasfritten bzw. keramische Farben zum Einsatz kommen. Demnach können die keramischen Farben als Glasuren oder Emails zum Einsatz kommen, wie dies im Einzelnen in der DE 195 12 847 C1 beschrieben wird, deren Offenbarungsgehalt durch Bezugnahme vollumfänglich in die vorliegende Offenbarung aufgenommen wird.

Die Erfindung betrifft auch ein Verfahren zur Herstellung einer keramischen Farbe aus einer Glasfritte, welche die oben beschriebene Zusammensetzung aufweist oder hieraus besteht, umfassend die Schritte:
(a) Bereitstellen einer Glasfritte in Form eines Pulvers, das die oben beschriebene Glaszusammensetzung aufweist oder hieraus besteht, wobei gegebenenfalls die bereits beschriebenen Zusatzstoffe in geeigneter Menge zugemischt sind oder werden;
(b) Herstellen einer Paste aus dem Pulver unter Verwendung eines Suspendiermittels;
(c) Aufbringen der Paste auf ein Trägersubstrat und
(d) Einbrennen der Paste auf dem Trägersubstrat.

Im Schritt (a) wird eine erfindungsgemäße Glasfritte durch das Erschmelzen und anschließende Abschrecken einer Glasmasse, wie bereits beschrieben, hergestellt. Die erhaltene Glasfritte wird auf Partikelgrößen bevorzugt < 40 µm gemahlen und gegebenenfalls mit den Zusatzstoffen (Pigmente, Füllstoffe) vermischt. Die Zusatzstoffe können vor, während oder nach dem Mahlen zur Zusammensetzung der Glasfritte zugegeben werden.

Das Pulver wird anschließend in Schritt (b) mit einem Suspendiermittel, z.B. Siebdrucköl angepastet. Die Anpastung des Pulvers erfolgt bevorzugt mit einem Verhältnis Pulver : Suspendiermittel von 5 : 1 bis 3 : 2, insbesondere 2 : 1. In Schritt (c) wird die Paste, bevorzugt im Siebdruck, auf den zu dekorierenden Gegenstand aufgebracht. Anschließend erfolgt der Einbrennprozess in Schritt (d), wobei die Glasfritte erweicht und einen Glasfluss auf der Trägersubstratoberfläche bildet, in dem die gegebenenfalls vorhandenen Zusatzstoffe eingebettet und auf dem Trägersubstrat fixiert werden.

Die Einbrenntemperatur beträgt bevorzugt < 750°C, bevorzugter < 700°C, noch bevorzugter < 650°C, insbesondere < 600°C. Die Einbrennzeit wird vorzugsweise im Bereich von 3 bis 30 min, bevorzugt von 5 bis 20 min, insbesondere von 10 bis 15 min eingestellt.

Besonders bevorzugt wird das Trägersubstrat ausgewählt aus Glas und/oder Glaskeramik, insbesondere auf Basis von Borosilicatgläsern. Ganz besonders bevorzugt weist das Trägersubstrat eine thermische Ausdehnung im Bereich von etwa 3 bis etwa 4,5∗10⁻⁶ K⁻¹ auf.

Gleichzeitig mit dem Einbrennen der Glasfritten-Paste kann, wenn dies erwünscht ist, ein Biegen des Trägersubstrats oder eines Teils hiervon durchgeführt werden. Das Biegen kann aber auch vor oder nach dem Einbrennen der Paste durchgeführt werden. Dies ist jedoch weniger bevorzugt.
Die Vorteile der vorliegenden Erfindung sind außerordentlich vielschichtig:
So gelingt es erfindungsgemäß Glasfritten bereitzustellen, welche es ermöglichen, alkali-, blei- und cadmiumfreie keramische Farben zur Verfügung zu stellen, welche die geschilderten Nachteile des Standes der Technik vermeiden. Diese weisen eine geringere thermische Ausdehnung und niedrigeres Diffusionsvermögen im Vergleich mit bisher bekannten Glasfritten bzw. keramischen Farben auf. Hieraus resultieren deutlich verringerte Spannungen zwischen keramischer Farbe und Trägersubstrat. Somit können höhere Biegebruchfestigkeiten erreicht und ein Abplatzen der keramischen Farbe von Trägersubstraten, wie emaillierten Glas- oder Glaskeramikartikeln, vermieden werden.

Durch die Vermeidung stark diffundierender Komponenten, wie Li₂O oder Na₂O, kann der Spannungsaufbau zwischen dem eingebrannten Glasfluss (der Glasfritte) und dem Trägersubstrat kontrolliert werden. Die Rissbildung kann dadurch deutlich herabgesetzt werden.

Von besonderem Vorteil ist, wenn sowohl die Zusammensetzung der Glasfritte bzw. keramischen Farbe als auch das Material des Trägersubstrats derart ausgewählt werden, dass beide einen möglichst ähnlichen, niedrigen thermischen Ausdehnungskoeffizienten aufweisen. Hierdurch gelingt es, die geschilderten Probleme aus dem Stand der Technik völlig zu vermeiden.

Die erfindungsgemäßen Glasfritten sind alkali-, blei- und cadmiumfrei und daher nicht umweltbelastend und erfordern keine besondere Abfall-Entsorgung.

Durch eine geeignete Pigmentierung der vorgefärbten Glasfritten lassen sich bereits mit niedrigen Pigmentgehalten schwarze keramische Farben herstellen, die ein ausgezeichnetes Deckvermögen beispielsweise auf farblosem Borosilicatglas aufweisen. Die Zugabe spezieller Zusatzstoffe ermöglicht eine gezielte Modifikation bestimmter Eigenschaften: So kann durch Zusatz von niedrigausdehnenden Füllstoffen, wie Petalit oder Nb₂O₅, in die erfindungsgemäßen Glasfritten die Herstellung gut haftender keramischer Farben erreicht werden, die eine hohe Biegebruchfestigkeit der dekorierten Trägersubstrate gewährleisten.

Die Glasfritten bzw. die hieraus erzeugten keramischen Farben sind für Dekorationen aller Art, beispielsweise auch großflächige Dekorationen, von Trägersubstraten geeignet. Vorteilhafterweise werden die Trägersubstrate aus Gläsern und/oder Glaskeramiken auf Borosilicatglas-Basis ausgewählt.

Das Einbrennen der Glasfritte auf einem Trägersubstrat gelingt ohne Probleme überraschenderweise bereits mit Einbrenntemperaturen < 650°C.

Erfindungsgemäß können auch vorgefärbte und/oder kristallisierbare Glasfritten eingesetzt werden, die als Basisfritten für die Dekoration eines Trägersubstrats dienen. Die Kristallisation der Glasfritte verhindert ein Ankleben der keramischen Farbe beim Ablösen der Form nach dem Formgebungsprozess (,antistick effect').

Nachfolgend soll die vorliegende Erfindung anhand von Beispielen im Einzelnen näher erläutert werden, welche jedoch nur zur Veranschaulichung und keinesfalls als Begrenzung des Schutzumfangs verstanden werden sollen.

### Beispiele

### Beispiele 1 bis 23

Die Rohstoffgemenge der erfindungsgemäßen Glaszusammensetzungen aus Tabelle 1 (in Mol-%), wurden eine Stunde bei 1050-1300°C erschmolzen. Die eingesetzten Rohstoffe waren Quarzmehl (SiO₂), Borsäure (H₃BO₃), Zinkoxid (ZnO), Zinkfluorid (ZnF₂), Bismut(III)-oxid (Bi₂O₃), Kupfer(II)-oxid (CuO), Titan(IV)-oxid (TiO₂), Baddeleyit (ZrO₂) und Magnesiumhydroxid (Mg(OH)₂). Zur Färbung des Glases wurden Kobalt(III)-oxid (Co₂O₃), Mangan(IV)-oxid (MnO₂) und Eisen(III)-oxid (Fe₂O₃) verwendet. Anschließend wurde ein kleiner Glasblock gegossen und der Rest der Schmelze in destilliertem Wasser abgeschreckt.

In Tabelle 2 sind die bei den Glaszusammensetzungen bestimmten Eigenschaften zusammengefasst. Dabei ist T_{g} die mittels Differentialthermoanalyse ermittelte Transformationstemperatur, α₂₀₋₃₀₀ der an massiven Proben mittels Dilatometer bestimmte thermische Ausdehnungskoeffizient im Temperaturbereich von 20-300°C, T_{K} die an gepulverten Proben mittels Differentialthermoanalyse gemessene maximale Kristallisationstemperatur der Glasfritte bis ca. 800°C.

Bei den angegebenen Kristallphasen bedeutet:
ZB - Zinkborat (Zn₃B₂O₆),
ZS - Zinksilicat/Willemit (Zn₂SiO₄),
ZT - Zinktitanat (Zn₂Ti₃O₈),
BB - Bismutborat (Bi₂B₈O₁₅) sowie
S - Suanit (Mg₂B₂O₅).

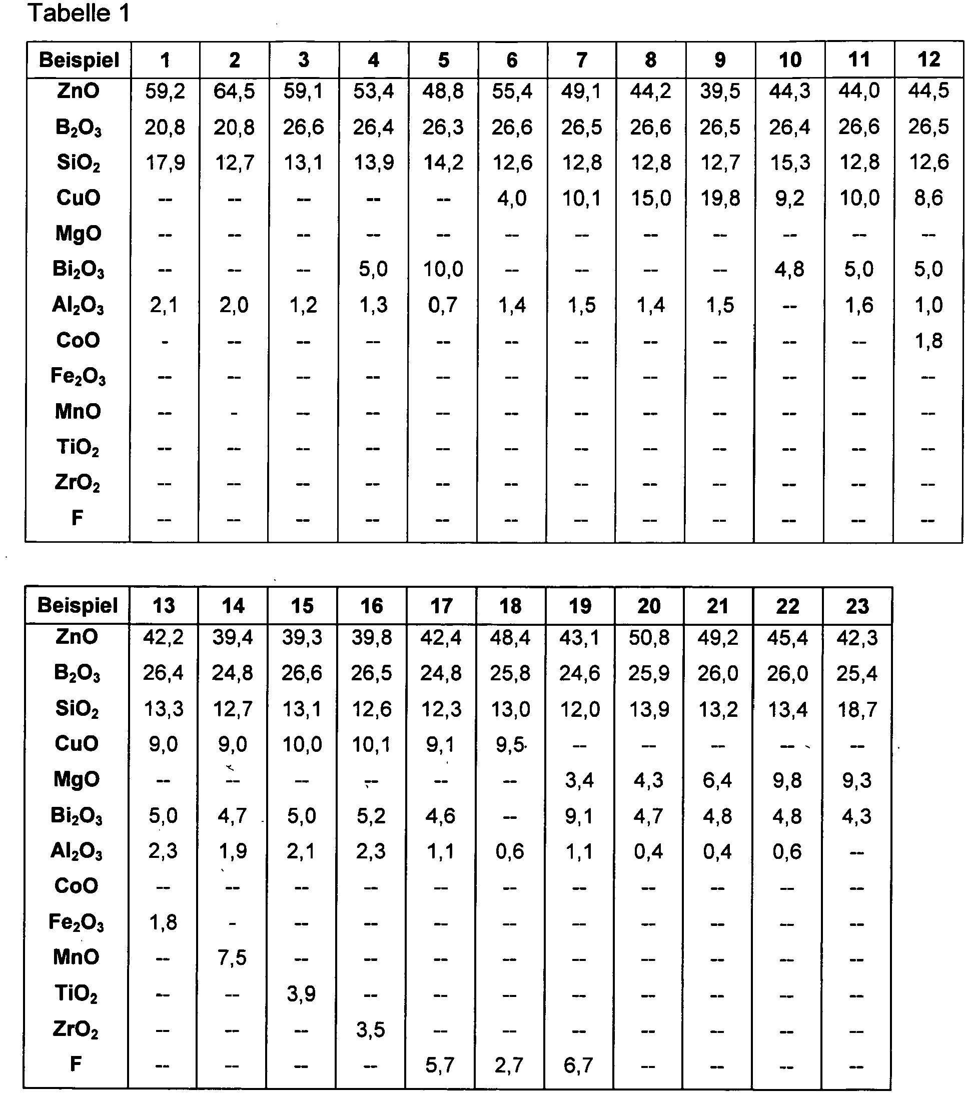

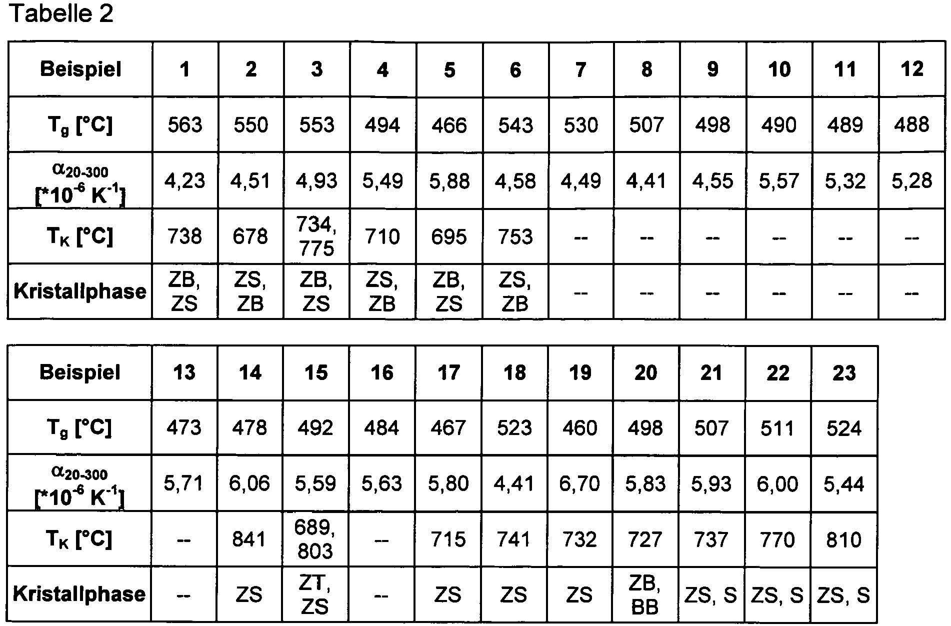

Beispiele 1 bis 5 und 19 sind Vergleichsbeispiele: In den Beispielen 1 bis 3 liegt weder CuO noch Bi₂O₃ vor, so dass die Transformationstemperatur T_{g} außerhalb des beanspruchten Bereichs von T_{g} < 550°C liegt. Dies belegt, dass reine ZnO-B₂O₃-SiO₂-Systeme ungeeignet sind. Da die Einbrenntemperatur zu hoch ist, tritt eine unerwünschte Verformung des Trägerglases auf.

In Vergleichsbeispiel 19 liegt der Fluorgehalt mit 6,7 Mol-% außerhalb des beanspruchten Bereichs, so dass die Voraussetzungen für den thermischen Ausdehnungskoeffizienten nicht erfüllt werden. Die Zugabe von Fluor fördert die Kristallisationstendenz, so dass der Fluorgehalt auf < 6 Mol-%, vorzugsweise nicht mehr als 5 Mol-%, beschränkt wurde.

Die Beispiele 3 bis 5 zeigen, dass mit steigendem Bi₂O₃-Gehalt der T_{g}-Wert sinkt während die thermische Ausdehnung steigt. Ein steigender CuO-Gehalt in den Beispielen 6 bis 9 senkt die Kristallisationstendenz sowie den T_{g}-Wert bei nahezu gleichbleibendem thermischen Ausdehnungskoeffizienten. Durch die Kombination von Bi₂O₃ und CuO in den Beispielen 10 und 11 erhält man gut aufschmelzende Glasflüsse mit niedrigen thermischen Ausdehnungen. Die Zugabe von färbenden Oxiden in den Beispielen 12 bis 14 ermöglicht die Herstellung von vorgefärbten Basisfritten für bevorzugt schwarze keramische Farben. Die Kombination von Bi₂O₃ und MgO in den Beispielen 19 bis 23 erlaubt die Herstellung von farblosen Glasfritten für keramische Farben. Mit steigendem MgO-Gehalt in der Glasfritte wird die Temperaturdifferenz zwischen T_{K} und T_{g} größer, so dass die Glasfritten in den Beispielen 22 und 23 ein ausgezeichnetes Aufschmelzverhalten aufweisen.

Die Kristallisation in den Glasfritten lässt sich somit über den MgO- bzw. CuO-Gehalt steuern während die Einbrenntemperatur über den Bi₂O₃-Gehalt in der Glaszusammensetzung regulierbar ist. Allerdings ist der MgO- und Bi₂O₃-Gehalt in der Glaszusammensetzung zu begrenzen, da die thermische Ausdehnung mit steigenden Gehalten erhöht wird. In den Beispielen 17 bis 19 führt der Fluorgehalt in der Glaszusammensetzung zu einer Erhöhung der Kristallisationsneigung in den Glasfritten.

### Beispiele 24 bis 34

Herstellung von auf BOROFLOAT® 33 eingebrannten keramischen Farben aus den Beispielen 10 und 23:
Das in destilliertem Wasser abgeschreckte Material der Beispiele 10 und 23 wurde auf mittlere Partikelgrößen von 2-5 µm gemahlen. Dem Glasfrittepulver wurden gemäß Tabelle 3 verschiedene niedrigausdehnende Füllstoffe, wie Spodumen (LiAlSi₂O₆, d₅₀= 4 µm, OTAVI MINERALS), Petalit (LiAlSi₄O₁₀, d₅₀= 4 µm, ANKERPOORT N V), Nioboxid (Nb₂O₅, d₅₀= 4 µm, COMETALS) und Zinnoxid (SnO₂, d₅₀ = 0,7, µm, LOMBERG) sowie Pigmente, wie Titanoxid (TiO₂, d₅₀= 0,7 µm, KRONOS® 1001) und Cu-Cr-Spinell (CuCr₂O₄, d₅₀= 1,7 µm, FERRO 247960), in Gew.-%, zugegeben. Anschließend erfolgte in einem Rührwerk die Anpastung des Pulvergemisches mit einem Verhältnis Pulver : Siebdruckmedium von 2 : 1. Als Siebdruckmedium wurde das Medium 80599 von FERRO verwendet. Die Paste wurde auf einem Dreiwalzwerk homogenisiert. Die siebdruckfähige Paste wurde mit einer halbautomatischen Siebdruckmaschine mit einem 120T-Polyestergewebe auf 3,3 mm Glasplatten aufgetragen. Die Glasplatten hatten eine Größe von 100 mm x 100 mm, in deren Mitte ein Testfeld mit 50 mm x 50 mm vollflächig bedruckt wurde. Die Proben wurden in einem Umluftofen mit einer Aufheizrate von 5 K/min, einer 15minütigen Haltezeit bei 620°C und einer Abkühlrate von 1 K/min eingebrannt. Die eingebrannten keramischen Farben wiesen Schichtdicken von 7-13 µm auf.

**Tabelle 3**

| **Beispiel** | **Glasfritte** | | **Zusatzstoff** | | | | | |
|---|---|---|---|---|---|---|---|---|
| | **Beispiel 10** | **Beispiel 23** | **TiO₂** | **CuCr₂O₄** | **LiAlSi₂O₆** | **SnO₂** | **Nb₂O₅** | **LiAlSi₄O₁₀** |
| **24** | 100 | | | | | | | |
| **25** | | 100 | | | | | | |
| **26** | 90 | | 10 | | | | | |
| **27** | 80 | | | 20 | | | | |
| **28** | 70 | | | 10 | 20 | | | |
| **29** | | 80 | 20 | | | | | |
| **30** | | 80 | | 20 | | | | |
| **31** | | 70 | 10 | | 20 | | | |
| **32** | | 80 | | | | 20 | | |
| **33** | | 80 | | | | | 20 | |
| **34** | | 70 | 10 | | | | | 20 |

In Tabelle 4 sind die an den Beispielen 24 bis 34 ermittelten Parameter dargestellt. Dabei wurde der thermische Ausdehnungskoeffizient α₂₀₋₃₀₀ an Stäbchen, die nach der ASTM C824-91 (aus dem Jahr 2000, reapproved) aus den Pulvern der Beispiele 24 bis 34 hergestellt wurden, mittels Dilatometer bestimmt.

Die Biegebruchfestigkeit σ wurde an jeweils 15 Proben eines Beispiels mittels Doppelringverfahren nach der DIN EN 1288-5 (aus Juni 2000) ermittelt. Die Prüfkraft wurde mit einer Geschwindigkeit von 2 N mm⁻² s⁻¹ auf die Probe aufgebracht. Die Auswertung erfolgte nach der Normalverteilung. An undekoriertem BOROFLOAT® 33 wurde eine Biegebruchfestigkeit von (115 ± 29) MPa bestimmt.

Die Helligkeit L* wurde mit einem Kugelspektralfotometer im CIELAB-Farbraum bestimmt. Die Messungen erfolgten mit der Normlichtart D65 für den 10° Normalbeobachter, wobei die Lichtquelle gegenüber dem Empfänger um 8° geneigt war (d/8°). Der Glanz wurde mittels einer "Glanzfalle" ausgeblendet. Die Messungen erfolgten auf der eingebrannten Farbe. Die erste Zahl gibt den Helligkeitswert der Farbe unter Verwendung eines schwarzen Hintergrundes (L*= 26) und die zweite eines weißen Hintergrundes (L*= 94) an.

Zur Ermittlung des Deckvermögens wurde die Differenz der Helligkeitswerte der Hintergründe (weiß, schwarz) 100% gesetzt. Anschließend wurde aus der Differenz, die aus den Helligkeitswerten der erfindungsgemäßen Beispiele 24 bis 34 unter Verwendung des weißen und schwarzen Hintergrundes ermittelt wurde, das Deckvermögen des jeweiligen Beispiels bezogen auf die verwendeten Hintergründe bestimmt.

Die Farbe und die Oberfläche der eingebrannten Beispiele 24 bis 34 wurden visuell beurteilt.

**Tabelle 4**

| **Beispiel** | **24** | **25** | **26** | **27** | **28** | **29** | **30** | **31** | **32** | **33** | **34** |
|---|---|---|---|---|---|---|---|---|---|---|---|
| **α₂₀₋₃₀₀ [*10⁻⁶ K⁻¹]** | 5,57 | 5,44 | 5,83 | 6,74 | 6,32 | 5,95 | 6,76 | 6,06 | 5,26 | 5,23 | 5,43 |
| **σ [MPa]** | 30,3 ±1,6 | 26,7 ±1,2 | 30,1 ±1,0 | 28,8 ±1,8 | 31,1 ±1,6 | 29,1 ±2,1 | 32,0 ±2,6 | 40,3 ±1,2 | 30,7 ±1,8 | 59,7 ±2,9 | 50,0 ±2,5 |
| **L*** | 29/70 | 36/72 | 50/62 | 15/21 | 33/41 | 68/75 | 23/27 | 65/74 | 46/73 | 63/75 | 67/76 |
| **Deckvermögen [%]** | 60 | 53 | 18 | 10 | 12 | 11 | 6 | 14 | 39 | 17 | 13 |
| **Farbe** | transparentes qrün | transluzentes weiß | hellgrün | schwarz | grau | weiß | schwarz | weiß | transluzentes weiß | weiß | weiß |
| **Oberfläche** | glänzend | glänzend | glänzend | glänzend | schwach glänzend | schwach glänzend | glänzend | matt | schwach glänzend | matt | matt |

Als geeignete Füllstoffe für die Senkung der thermischen Ausdehnung erweisen sich SnO₂ und LiAlSi₄O₁₀. Durch Nb₂O₅ wurde neben der Ausdehnungssenkung ein hohes Deckvermögen erzielt, so dass sich weiße Farben herstellen lassen.

Trotz niedriger Schichtdicken < 15 µm konnten gut deckende und haftende, schwarze, grüne sowie weiße keramische Farben hergestellt werden.

Die Biegebruchfestigkeit der erfindungsgemäßen keramischen Farben wurde gegenüber bisherigen keramischen Farben für Borosilicatgläser von ca. 20-30 MPa auf etwa 40-60 MPa in den Beispielen 31, 33 und 34 erhöht. Somit beträgt die Festigkeit des mit den erfindungsgemäßen keramischen Farben dekorierten Borosilicatglases noch bis zu 50% des unemaillierten Glases.

## Patentansprüche

1. Alkali-, blei- und cadmiumfreie Glasfritte, insbesondere zur Herstellung keramischer Farben, mit einem thermischen Ausdehnungskoeffizienten alpha im Temperaturbereich von 20 bis 300°C von weniger als 6,5∗10⁻⁶ K⁻¹ und einer Transformationstemperatur T_{g} < 550°C, welche die nachfolgende Glaszusammensetzung aufweist oder hieraus besteht:
35 bis 70 Mol-% ZnO
20 bis 38 Mol-% B₂O₃
6 bis 20 Mol-% SiO₂
0,1 bis 30 Mol-% RO (RO ist CuO und/oder MgO)
0 bis 20 Mol-% Bi₂O₃
0 bis 5 Mol-% Al₂O₃
0 bis 5 Mol-% CoO
0 bis 5 Mol-% Fe₂O₃
0 bis 10 Mol-% MnO
0 bis 5 Mol-% TiO₂
0 bis 5 Mol-% ZrO₂
0 bis <6 Mol-% F, vorzugsweise 0 bis 5 Mol-% F,
wobei die Summe aus CoO, Fe₂O₃ und MnO 15 Mol-% nicht übersteigt und CuO-freie Glasfritten einen Bi₂O₃-Gehalt von 0,1 bis 20 Mol-% aufweisen sowie gegebenenfalls Zusatzstoffe in geeigneter Menge.

2. Alkali-, blei- und cadmiumfreie Glasfritte nach Anspruch 1, **dadurch gekennzeichnet, dass** diese die nachfolgende Glaszusammensetzung aufweist oder hieraus besteht:
39 bis 60 Mol-% ZnO
24 bis 28 Mol-% B₂O₃
11 bis 15 Mol-% SiO₂
10 bis 20 Mol-% CuO
0 bis 10 Mol-% Bi₂O₃
0 bis 3 Mol-% Al₂O₃
0 bis 2 Mol-% CoO
0 bis 2 Mol-% Fe₂O₃
0 bis 10 Mol-% MnO,
wobei die Summe aus CoO, Fe₂O₃ und MnO 10 Mol-% nicht übersteigt sowie gegebenenfalls Zusatzstoffe in geeigneter Menge.

3. Alkali-, blei- und cadmiumfreie Glasfritte nach Anspruch 1, **dadurch gekennzeichnet, dass** diese die nachfolgende Glaszusammensetzung aufweist oder hieraus besteht:
39 bis 60 Mol-% ZnO
24 bis 28 Mol-% B₂O₃
11 bis 15 Mol-% SiO₂
5 bis 10 Mol-% MgO
4 bis 10 Mol-% Bi₂O₃
0 bis 3 Mol-% Al₂O₃
sowie gegebenenfalls Zusatzstoffe in geeigneter Menge.

4. Alkali-, blei- und cadmiumfreie Glasfritte nach einem der Ansprüche 1 bis 3, **dadurch gekennzeichnet, dass** die Glasfritte einen thermischen Ausdehnungskoeffizienten alpha im Temperaturbereich von 20 bis 300°C von weniger als 6,0∗10⁻⁶ K⁻¹, bevorzugt < 5,5∗10⁻⁶ K⁻¹, insbesondere < 5,0∗10⁻⁶ K⁻¹, ganz besonders bevorzugt im Bereich von etwa 3 bis etwa 4,5∗10⁻⁶ K⁻¹ aufweist.

5. Alkali-, blei- und cadmiumfreie Glasfritte nach mindestens einem der vorangehenden Ansprüche 1 bis 4, **dadurch gekennzeichnet, dass** die Glasfritte Zusatzstoffe in geeigneten Mengen enthält, ausgewählt aus
Füllstoffen, wie Zinnoxid (SnO₂), Spodumen (LiAlSi₂O₆), Petalit (LiAlSi₄O₁₀), β-Eukryptit (LiAlSiO₄), Cordierit (Mg₂Al₄Si₅O₁₈), Zirkon (ZrSiO₄), Quarzglas (SiO₂), Nioboxid (Nb₂O₆) und/oder niedrigausdehnenden Glaskeramiken aus dem Dreiphasensystem Li₂O-Al₂O₃-SiO₂ mit einem thermischen Ausdehnungskoeffizienten alpha im Temperaturbereich von 20 bis 300°C von weniger als 3,0∗10⁻⁶ K⁻¹, bevorzugt < 2,5∗10⁻⁶ K⁻¹, noch bevorzugter < 2,0∗10⁻⁶ K⁻¹, insbesondere bevorzugt < 1,5∗10⁻⁶ K⁻¹, ganz besonders bevorzugt im Bereich von etwa 0 bis etwa 1,0∗10⁻⁶ K⁻¹, die weitere Komponenten, wie Na₂O, K₂O, TiO₂, ZrO₂, Sb₂O₃, BaO, SrO, ZnO, CaO, MgO, B₂O₃, SnO, V₂O₅, P₂O₅, F, mit Gehalten <10 Mol-% enthalten können
Pigmenten, wie Titanoxid (TiO₂), Spinellen, dotiertem Zirkon (ZrSiO₄ : Pr, V, Fe), Baddeleyit (ZrO₂) und dotiertem Hämatit (Fe₂O₃: Cr).

6. Alkali-, blei- und cadmiumfreie Glasfritte nach mindestens einem der vorangehenden Ansprüche 1 bis 5, **dadurch gekennzeichnet, dass** zur Senkung der thermischen Ausdehnung und Erhöhung der Biegebruchfestigkeit der Glasfritte über 0 und bis 30 Gew.-% eine oder mehrere der folgenden Zusatzstoffe, ausgewählt aus Füllstoffen, bestehend aus der Gruppe aus Zinnoxid (SnO₂), Spodumen (LiAlSi₂O₆), Petalit (LiAlSi₄O₁₀) und/oder Nioboxid (Nb₂O₅), enthalten sind.

7. Alkali-, blei- und cadmiumfreie Glasfritte nach mindestens einem der Ansprüche 1 bis 5, **dadurch gekennzeichnet, dass** zur Erhöhung der Biegebruchfestigkeit in der Glasfritte 0,1 bis 30 Gew.-% kristallisierbares Nioboxid (Nb₂O₆) und 0 bis 30 Gew.-% Pigmente enthalten sind.

8. Verfahren zur Herstellung einer Glasfritte gemäß einem der Ansprüche 1 bis 7, **dadurch gekennzeichnet, dass** die Glaszusammensetzung aus einem der Ansprüche 1 bis 7 bei einer Temperatur im Bereich von 1000 bis 1300°C aufgeschmolzen wird, die Schmelze abgeschreckt und das erhaltene Material gemahlen wird.

9. Verfahren nach Anspruch 8, **dadurch gekennzeichnet, dass** vor, während oder nach dem Mahlen Zusatzstoffe zugegeben werden.

10. Verwendung einer Glasfritte nach einem der Ansprüche 1 bis 7 in Form einer Basisfritte zur Herstellung einer keramischen Farbe für die Dekoration eines Trägersubstrats.

11. Verwendung nach Anspruch 10, **dadurch gekennzeichnet, dass** eine vorgefärbte Basisfritte eingesetzt wird.

12. Verwendung nach Anspruch 11, **dadurch gekennzeichnet, dass** eine schwarze keramische Farbe durch Zugabe von Pigmenten zur Glasfritte in einer Menge von 5 bis 30 Gew.-% hergestellt wird.

13. Verwendung nach mindestens einem der vorangehenden Ansprüche 10 bis 12, **dadurch gekennzeichnet, dass** eine kristallisierbare Basisfritte eingesetzt wird.

14. Verwendung nach mindestens einem der vorangehenden Ansprüche 10 bis 13, **dadurch gekennzeichnet, dass** als Trägersubstrat Glas und/oder Glaskeramik, insbesondere auf Basis von Borosilicatglas, eingesetzt wird.

15. Verwendung nach mindestens einem der vorangehenden Ansprüche 10 bis 14, **dadurch gekennzeichnet, dass** das Material des Trägersubstrats derart ausgewählt wird, dass eine möglichst geringe Differenz zwischen den thermischen Ausdehnungskoeffizienten der verwendeten Glasfritte und dem Material des Trägersubstrats vorliegt.

16. Verwendung nach mindestens einem der vorangehenden Ansprüche 10 bis 15, **dadurch gekennzeichnet, dass** das Material des Trägersubstrats, die Zusammensetzung der Glasfritte und die keramische Farbe jeweils einen niedrigen thermischen Ausdehnungskoeffizienten alpha im Temperaturbereich von 20 bis 300°C aufweisen, bevorzugt alpha < 6,5∗10⁻⁶ K⁻¹, bevorzugter < 6,0∗10⁻⁶ K⁻¹, noch bevorzugter < 5,5∗10⁻⁶ K⁻¹, insbesondere bevorzugt < 5,0∗10⁻⁶ K⁻¹, ganz besonders bevorzugt im Bereich von etwa 3 bis etwa 4,5∗10⁻⁶ K⁻¹.

17. Verwendung nach mindestens einem der vorangehenden Ansprüche 10 bis 16, **dadurch gekennzeichnet, dass** als Trägersubstrat ein gebogenes oder zu biegendes Trägersubstrat eingesetzt wird.

18. Verwendung nach Anspruch 17, **dadurch gekennzeichnet, dass** das Biegen des Trägersubstrates während der Herstellung der keramischen Farbe durchgeführt wird.

19. Verfahren zur Herstellung einer keramischen Farbe aus einer Glasfritte nach einem der Ansprüche 1 bis 7, umfassend die Schritte:
(a) Bereitstellen einer Glasfritte in Form eines Pulvers, das eine Glaszusammensetzung aus einem der Ansprüche 1 bis 7 aufweist oder hieraus besteht;
(b) Herstellen einer Paste aus dem Pulver unter Verwendung eines Suspendiermittels;
(c) Aufbringen der Paste auf ein Trägersubstrat und
(d) Einbrennen der Paste auf dem Trägersubstrat.

20. Verfahren nach Anspruch 19, **dadurch gekennzeichnet, dass** das Suspendiermittel ausgewählt wird aus Siebdrucköl, Siebdruckwachs oder anderen thixotropen Medien.

21. Verfahren nach Anspruch 19 oder 20, **dadurch gekennzeichnet, dass** die Anpastung des Pulvers mit einem Verhältnis Pulver : Suspendiermittel von 5 : 1 bis 3 : 2, bevorzugt 2 : 1 durchgeführt wird.

22. Verfahren nach Anspruch 19, **dadurch gekennzeichnet, dass** das Aufbringen der Paste im Siebdruck durchgeführt wird.

23. Verfahren nach mindestens einem der vorangehenden Ansprüche 19 bis 22, **dadurch gekennzeichnet, dass** die Zusatzstoffe ausgewählt sind aus Füllstoffen, wie Zinnoxid (SnO₂), Spodumen (LiAlSi₂O₆), Petalit (LiAlSi₄O₁₀), β-Eukryptit (LiAlSiO₄), Cordierit (Mg₂Al₄Si₅O₁₈), Nioboxid (Nb₂O₅), Zirkon (ZrSiO₄), Quarzglas (SiO₂) und/oder niedrigausdehnenden Glaskeramiken aus dem Dreiphasensystem Li₂O-Al₂O₃-SiO₂ mit einem thermischen Ausdehnungskoeffizienten alpha im Temperaturbereich von 20 bis 300°C von weniger als 3,0∗10⁻⁶ K⁻¹, bevorzugt < 2,5∗10⁻⁶ K⁻¹, noch bevorzugter < 2,0∗10⁻⁶ K⁻¹, insbesondere bevorzugt < 1,5∗10⁻⁶ K⁻¹, ganz besonders bevorzugt im Bereich von etwa 0 bis etwa 1,0∗10⁻⁶ K⁻¹, die weitere Komponenten, wie Na₂O, K₂O, TiO₂, ZrO₂, Sb₂O₃, BaO, SrO, ZnO, CaO, MgO, B₂O₃, SnO, V₂O₅, P₂O₅, F, mit Gehalten <10 Mol-% enthalten können,
Pigmenten, wie Titanoxid (TiO₂), Spinellen, dotiertem Zirkon (ZrSiO₄ : Pr, V, Fe), Baddeleyit (ZrO₂) und dotiertem Hämatit (Fe₂O₃: Cr).

24. Verfahren nach mindestens einem der vorangehenden Ansprüche 19 bis 23, **dadurch gekennzeichnet, dass** das Trägersubstrat ausgewählt wird aus Glas und/oder Glaskeramik, insbesondere auf Basis von Borosilicatglas.

25. Verfahren nach Anspruch 24, **dadurch gekennzeichnet, dass** ein Trägersubstrat aus Glas und/oder Glaskeramik mit einem niedrigen thermischen Ausdehnungskoeffizienten alpha im Temperaturbereich von 20 bis 300°C ausgewählt wird, bevorzugt alpha < 6,5∗10⁻⁶ K⁻¹, bevorzugter < 6,0∗10⁻⁶ K⁻¹, noch bevorzugter < 5,5∗10⁻⁶ K⁻¹, insbesondere bevorzugt < 5,0∗10⁻⁶ K⁻¹, ganz besonders bevorzugt im Bereich von etwa 3 bis etwa 4,5∗10⁻⁶ K⁻¹.

26. Verfahren nach mindestens einem der vorangehenden Ansprüche 19 bis 25, **dadurch gekennzeichnet, dass** das Material des Trägersubstrats derart ausgewählt wird, dass eine möglichst geringe Differenz zwischen den thermischen Ausdehnungskoeffizienten der verwendeten Glasfritte und dem Material des Trägersubstrats vorliegt.

27. Verfahren nach mindestens einem der vorangehenden Ansprüche 19 bis 26, **dadurch gekennzeichnet, dass** eine Einbrenntemperatur < 750°C, bevorzugt < 700°C, noch bevorzugter < 650°C, insbesondere < 600°C ausgewählt wird.

28. Verfahren nach mindestens einem der vorangehenden Ansprüche 19 bis 27, **dadurch gekennzeichnet, dass** die Einbrennzeit im Bereich von 3 bis 30 min, bevorzugt von 5 bis 20 min, insbesondere von 10 bis 15 min eingestellt wird.

29. Verfahren nach mindestens einem der vorangehenden Ansprüche 19 bis 28, **dadurch gekennzeichnet, dass** während des Einbrennens die Paste zu einer glatten Glasschicht aufgeschmolzen wird.

30. Verfahren nach mindestens einem der vorangehenden Ansprüche 19 bis 29, **dadurch gekennzeichnet, dass** gleichzeitig mit dem Einbrennen der Glasfritte ein Biegen des Trägersubstrats oder eines Teils hiervon durchgeführt wird.

31. Alkali-, blei- und cadmiumfreie keramische Farbe, erhältlich durch ein Verfahren mit den Schritten:
(a) Bereitstellen einer Glasfritte in Form eines Pulvers, das eine Glaszusammensetzung aus einem der Ansprüche 1 bis 7 aufweist oder hieraus besteht;
(b) Herstellen einer Paste aus dem Pulver unter Verwendung eines Suspendiermittels;
(c) Aufbringen der Paste auf ein Trägersubstrat und
(d) Einbrennen der Paste auf dem Trägersubstrat.

32. Alkali-, blei- und cadmiumfreie keramische Farbe, nach Anspruch 31, **dadurch gekennzeichnet, dass** das Suspendiermittel ausgewählt wird aus Siebdrucköl, Siebdruckwachs oder anderen thixotropen Medien.

33. Alkali-, blei- und cadmiumfreie keramische Farbe nach Anspruch 31 oder 32, **dadurch gekennzeichnet, dass** die Anpastung des Pulvers mit einem Verhältnis Pulver: Suspendiermittel von 5 : 1 bis 3 : 2, bevorzugt 2 : 1 durchgeführt wird.

34. Alkali-, blei- und cadmiumfreie keramische Farbe, nach Anspruch 33, **dadurch gekennzeichnet, dass** das Aufbringen der Paste im Siebdruck durchgeführt wird.

35. Alkali-, blei- und cadmiumfreie keramische Farbe nach mindestens einem der vorangehenden Ansprüche 31 bis 34, **dadurch gekennzeichnet, dass** das Trägersubstrat ausgewählt ist aus Glas oder Glaskeramik, insbesondere auf Basis von Borosilicatglas.

36. Alkali-, blei- und cadmiumfreie keramische Farbe nach mindestens einem der vorangehenden Ansprüche 31 bis 35, **dadurch gekennzeichnet, dass** ein Trägersubstrat aus Glas und/oder Glaskeramik mit einem niedrigen thermischen Ausdehnungskoeffizienten alpha im Temperaturbereich von 20 bis 300°C ausgewählt wird, bevorzugt alpha < 6,5∗10⁻⁶ K⁻¹, bevorzugter < 6,0∗10⁻⁶ K⁻¹, noch bevorzugter < 5,5∗10⁻⁶ K⁻¹, insbesondere bevorzugt < 5,0∗10⁻⁶ K⁻¹, ganz besonders bevorzugt im Bereich von etwa 3 bis etwa 4,5∗10⁻⁶ K⁻¹.

37. Alkali-, blei- und cadmiumfreie keramische Farbe nach mindestens einem der vorangehenden Ansprüche 31 bis 36, **dadurch gekennzeichnet, dass** die keramische Farbe einen thermischen Ausdehnungskoeffizienten alpha im Temperaturbereich von 20 bis 300°C von weniger als 6,5∗10⁻⁶ K⁻¹ und eine Transformationstemperatur T_{g} von weniger als 550°C aufweist.

38. Alkali-, blei- und cadmiumfreie keramische Farbe nach mindestens einem der vorangehenden Ansprüche 31 bis 37, **dadurch gekennzeichnet, dass** die keramische Farbe einen thermischen Ausdehnungskoeffizienten alpha im Temperaturbereich von 20 bis 300°C von weniger als 6,0∗10⁻⁶ K⁻¹, bevorzugt < 5,5∗10⁻⁶ K⁻¹, insbesondere bevorzugt < 5,0∗10⁻⁶ K⁻¹, ganz besonders bevorzugt im Bereich von etwa 3 bis etwa 4,5∗10⁻⁶ K⁻¹ aufweist.

39. Alkali-, blei- und cadmiumfreie keramische Farbe nach mindestens einem der vorangehenden Ansprüche 31 bis 38, **dadurch gekennzeichnet, dass** das Material des Trägersubstrats derart ausgewählt ist, dass eine möglichst geringe Differenz zwischen den thermischen Ausdehnungskoeffizienten der verwendeten Glasfritte und dem Material des Trägersubstrats vorliegt.

40. Alkali-, blei- und cadmiumfreie keramische Farbe nach mindestens einem der vorangehenden Ansprüche 31 bis 39, **dadurch gekennzeichnet, dass** die Einbrenntemperatur < 750°C, bevorzugt < 700°C, noch bevorzugter < 650°C, insbesondere < 600°C beträgt.

41. Alkali-, blei- und cadmiumfreie keramische Farbe nach mindestens einem der vorangehenden Ansprüche 31 bis 40, **dadurch gekennzeichnet, dass** die Einbrennzeit im Bereich von 3 bis 30 min, bevorzugt von 5 bis 20 min, insbesondere von 10 bis 15 min eingestellt wird.

42. Alkali-, blei- und cadmiumfreie keramische Farbe nach Anspruch 41, **dadurch gekennzeichnet, dass** während des Einbrennens die Paste zu einer glatten Glasschicht aufgeschmolzen wird.

43. Alkali-, blei- und cadmiumfreie keramische Farbe nach mindestens einem der vorangehenden Ansprüche 31 bis 42, **dadurch gekennzeichnet, dass** gleichzeitig mit dem Einbrennen der Glasfritte ein Biegen des Trägersubstrats oder eines Teils hiervon durchgeführt wird.

44. Alkali-, blei- und cadmiumfreie keramische Farbe nach mindestens einem der vorangehenden Ansprüche 31 bis 43, **dadurch gekennzeichnet, dass** die Biegebruchfestigkeit des mit der keramischen Farbe versehenen Trägersubstrats, mindestens 20% und bis zu 50% der Bruchfestigkeit des Trägersubstrats ohne keramische Farbe beträgt.

45. Alkali-, blei- und cadmiumfreie keramische Farbe nach mindestens einem der vorangehenden Ansprüche 31 bis 44, **dadurch gekennzeichnet, dass** die Schichtdicke der keramischen Farbe im Bereich von 5 bis 30 µm, bevorzugt von 5 bis 20 µm liegt.

## Claims

1. Alkali-, lead- and cadmium-free glass frit, in particular for the production of ceramic colors, having a thermal expansion coefficient alpha in the temperature range of 20 to 300°C of less than 6.5*10⁻⁶ K⁻¹ and a transformation temperature T_{g}<550°C, which comprises or consists of the following glass composition:
35 to 70 mol% ZnO
20 to 38 mol% B₂O₃
6 to 20 mol% SiO₂
0.1 to 30 mol% RO (RO is CuO and/or MgO)
0 to 20 mol% Bi₂O₃
0 to 5 mol% Al₂O₃
0 to 5 mol% CoO
0 to 5 mol% Fe₂O₃
0 to 10 mol% MnO
0 to 5 mol% TiO₂
0 to 5 mol% ZrO₂
0 to <6 mol% F, preferably 0 to 5 mol% F,
wherein the sum total of CoO, Fe₂O₃ and MnO does not exceed 15 mol% and CuO-free glass frits have a Bi₂O₃ content of 0.1 to 20 mol% and optionally additives in a suitable amount.

2. Alkali-, lead- and cadmium-free glass frit according to claim 1, **characterized in that** it comprises or consists of the following glass composition:
39 to 60 mol% ZnO
24 to 28 mol% B₂O₃
11 to 15 mol% SiO₂
10 to 20 mol% CuO
0 to 10 mol% Bi₂O₃
0 to 3 mol% Al₂O₃
0 to 2 mol% CoO
0 to 2 mol% Fe₂O₃
0 to 10 mol% MnO
wherein the sum of CoO, Fe₂O₃ and MnO does not exceed 10 mol% and optionally additives in a suitable amount.

3. Alkali-, lead- and cadmium-free glass frit according to claim 1, **characterized in that** it comprises or consists of the following glass composition:
39 to 60 mol% ZnO
24 to 28 mol% B₂O₃
11 to 15 mol% Si0₂
5 to 10 mol% MgO
4 to 10 mol% Bi₂O₃
0 to 3 mol% Al₂O₃
and optionally additives in a suitable amount.

4. Alkali-, lead- and cadmium-free glass frit according to one of the claims 1 to 3, **characterized in that** the glass frit has a thermal expansion coefficient alpha in the temperature range from 20 to 300°C of less than 6.0*10⁻⁶ K⁻¹, preferably <5.5*10⁻⁶ K⁻¹, more preferably <5.0*10⁻⁶ K⁻¹, very particularly preferably in the range of about 3 to about 4.5*10⁻⁶ K⁻¹.

5. Alkali-, lead- and cadmium-free glass frit according to at least one of the preceding claims 1 to 4, **characterized in that** the glass frit contains additives in suitable amounts, selected from fillers such as tin oxide (SnO₂), spodumene (LiAlSi₂O₆), petalite (LiAlSi₄O₁₀), β-eucryptite (LiAlSiO₄), cordierite (Mg₂Al₄Si₅O₁₈), zirconium (ZrSiO₄), quartz glass (SiO₂), niobium oxide (Nb₂O₆) and/or low-expansion glass ceramics from the three-phase system Li₂O-Al₂O₃-SiO₂ with a thermal expansion coefficient alpha in the temperature range of 20 to 300°C of less than 3.0*10⁻⁶ K⁻¹, preferably <2.5*10⁻⁶ K⁻¹, still more preferably <2.0*10⁻⁶ K⁻¹, particularly preferably <1.5*10⁻⁶ K⁻¹, very particularly preferably in the range from about 0 to about 1.0*10⁻⁶ K⁻¹, which can contain further components such as Na₂O, K₂O, TiO₂, ZrO₂, Sb₂O₃, BaO, SrO, ZnO, CaO, MgO, B₂O₃, SnO, V₂O₅, P₂O₅, F, with contents <10 mol%, pigments such as titanium oxide (TiO₂), spinels, doped zirconium (ZrSiO₄:Pr, V, Fe), baddeleyite (ZrO₂) and doped hematite (Fe₂O₃:Cr).

6. Alkali-, lead- and cadmium-free glass frit according to at least one of the preceding claims 1 to 5, **characterized in that** for reducing the thermal expansion and increasing the bending strength of the glass frit over 0 and up to 30 wt.-%, one or more of the following additives are included which are selected from fillers consisting of the group consisting of tin oxide (SnO₂), spodumene (LiAlSi₂O₆), petalite (LiAlSi₄O₁₀) and/or niobium oxide (Nb₂O₅).

7. Alkali-, lead- and cadmium-free glass frit according to at least one of claims 1 to 5, **characterized in that** to increase the flexural strength in the glass frit, 0.1 to 30 wt.-% crystallizable niobium oxide (Nb₂O₆) and 0 to 30 wt.-% pigments are included.

8. Method for producing a glass frit according to one of the claims 1 to 7, **characterized in that** the glass composition of one of the claims 1 to 7 is melted at a temperature in the range of 1000 to 1300°C, the melt is quenched and the resulting material is ground.

9. Method according to claim 8, **characterized in that** additives are added before, during or after the grinding.

10. Use of a glass frit according to one of the claims 1 to 7 in the form of a base frit for the production of a ceramic color for the decoration of a carrier substrate.

11. Use according to claim 10, **characterized in that** a pre-colored base frit is used.

12. Use according to claim 11, **characterized in that** a black ceramic color is prepared by adding pigments to the glass frit in an amount of 5 to 30 wt.-%.

13. Use according to at least one of the preceding claims 10 to 12, **characterized in that** a crystallizable base frit is used.

14. Use according to at least one of the preceding claims 10 to 13, **characterized in that** the carrier substrate used is glass and/or glass-ceramic, in particular based on borosilicate glass.

15. Use according to at least one of the preceding claims 10 to 14, **characterized in that** the material of the carrier substrate is selected such that the smallest possible difference is provided between the thermal expansion coefficients of the glass frits used and the material of the carrier substrate.

16. Use according to at least one of the preceding claims 10 to 15, **characterized in that** the material of the carrier substrate, the composition of the glass frits and the ceramic color each have a low thermal expansion coefficient alpha in the temperature range from 20 to 300°C, preferably alpha <6.5*10⁻⁶ K⁻¹, more preferably <6.0*10⁻⁶ K⁻¹, even more preferably <5.5*10⁻⁶ K⁻¹, especially preferably <5.0*10⁻⁶ K⁻¹, very particularly preferably in the range of about 3 to about 4.5*10⁻⁶ K⁻¹.

17. Use according to at least one of the preceding claims 10 to 16, **characterized in that** the carrier substrate used is a carrier substrate that is bent or is to be bent.

18. Use according to claim 17, **characterized in that** the bending of the carrier substrate is carried out during the production of the ceramic color.

19. Method for producing a ceramic color from a glass frit according to one of the claims 1 to 7, comprising the steps of:
a) providing a glass frit in the form of a powder comprising or consisting of a glass composition of one of the claims 1 to 7;
b) preparing a paste from the powder using a suspending agent;
c) applying the paste to a carrier substrate and
d) baking the paste on the carrier substrate.

20. Method according to claim 19, **characterized in that** the suspending agent is selected from screen printing oil, screen printing wax or other thixotropic media.

21. Method according to claim 19 or 20, **characterized in that** the pasting of the powder is performed with a ratio of powder:suspending agent of 5:1 to 3:2, preferably 2:1.

22. Method according to claim 19, **characterized in that** the application of the paste is carried out by screen printing.

23. Method according to at least one of the preceding claims 19 to 22, characterized that the additives are selected from fillers such as tin oxide (SnO₂), spodumene (LiAlSi₂O₆), petalite (LiAlSi₄O₁₀), β-eucryptite (LiAlSiO₄), cordierite (Mg₂Al₄Si₅O₁₈), niobium oxide (Nb₂O₅), zirconium (ZrSiO₄), quartz glass (SiO₂) and/or low-expansion glass ceramics from the three-phase system Li₂O-Al₂O₃-SiO₂ with a thermal expansion coefficient alpha in the temperature range of 20 to 300°C of less than 3.0*10⁻⁶ K⁻¹, preferably <2.5*10⁻⁶ K⁻¹, still more preferably <2.0*10⁻⁶ K⁻¹, particularly preferably <1.5*10⁻⁶ K⁻¹, very particularly preferably in the range from about 0 to about 1.0*10⁻⁶ K⁻¹, which can contain further components such as Na₂O, K₂O, TiO₂, ZrO₂, Sb₂O₃, BaO, SrO, ZnO, CaO, MgO, B₂O₃, SnO, V₂O₅, P₂O₅, F, with contents <10 mol%, pigments such as titanium oxide (TiO₂), spinels, doped zirconium (ZrSiO₄:Pr, V, Fe), baddeleyite (ZrO₂) and doped hematite (Fe₂O₃:Cr).

24. Method according to at least one of the preceding claims 19 to 23, **characterized in that** the carrier substrate is selected from glass and/or glass ceramic, in particular based on borosilicate glass.

25. Method according to claim 24, **characterized in that** a carrier substrate of glass and/or glass ceramic is selected with a low thermal expansion coefficient alpha in the temperature range of 20 to 300°C, preferably alpha <6.5*10⁻⁶ K⁻¹, more preferably <6.0*10⁻⁶ K⁻¹, even more preferably <5.5*10⁻⁶ K⁻¹, especially preferably <5.0*10⁻⁶ K⁻¹, very particularly preferably in the range of about 3 to about 4.5*10⁻⁶ K⁻¹.

26. Method according to at least one of the preceding claims 19 to 25, **characterized in that** the material of the carrier substrate is selected such that there is the smallest possible difference between the thermal expansion coefficients of the glass frit used and the material of the carrier substrate.

27. Method according to at least one of the preceding claims 19 to 26, **characterized in that** a baking temperature of <750°C, preferably <700°C, more preferably <650°C, in particular <600°C is selected.

28. Method according to at least one of the preceding claims 19 to 27, **characterized in that** the baking time is set in the range of 3 to 30 minutes, preferably from 5 to 20 minutes, in particular from 10 to 15 minutes.

29. Method according to at least one of the preceding claims 19 to 28, **characterized in that** the paste is melted to a smooth glass layer during baking.

30. Method according to at least one of the preceding claims 19 to 29, **characterized in that** a bending of the carrier substrate or of a part thereof is carried out simultaneously with the baking of the glass frit.

31. Alkali-, lead- and cadmium-free ceramic color, obtainable by a method comprising the steps:
a) providing a glass frit in the form of a powder comprising or consisting of a glass composition of one of the claims 1 to 7;
b) preparing a paste from the powder using a suspending agent;
c) applying the paste to a carrier substrate and
d) baking the paste on the carrier substrate.

32. Alkali-, lead- and cadmium-free ceramic color, according to claim 31, **characterized in that** the suspending agent is selected from screen printing oil, screen printing wax or other thixotropic media.

33. Alkali-, lead- and cadmium-free ceramic color according to claim 31 or 32, **characterized in that** the pasting of the powder is performed with a ratio of powder:suspending agent of 5:1 to 3:2, preferably 2:1.

34. Alkali-, lead- and cadmium-free ceramic color, according to claim 33, **characterized in that** the application of the paste is carried out by screen printing.

35. Alkali-, lead- and cadmium-free ceramic color according to at least one of the preceding claims 31 to 34, **characterized in that** the carrier substrate is selected from glass or glass ceramic, in particular based on borosilicate glass.

36. Alkali-, lead- and cadmium-free ceramic color according to at least one of the preceding claims 31 to 35, **characterized in that** a carrier substrate of glass and/or glass ceramic is selected with a low thermal expansion coefficient alpha in the temperature range of 20 to 300°C, preferably alpha <6.5*10⁻⁶ K⁻¹, more preferably <6.0*10⁻⁶ K⁻¹, even more preferably <5.5*10⁻⁶ K⁻¹, especially preferably <5.0*10⁻⁶ K⁻¹, very particularly preferably in the range of about 3 to about 4.5*10⁻⁶ K⁻¹.

37. Alkali-, lead- and cadmium-free ceramic color according to at least one of the preceding claims 31 to 36, **characterized in that** the ceramic color has a thermal expansion coefficient alpha in the temperature range of 20 to 300°C of less than 6.5*10⁻⁶ K⁻¹ and a transformation temperature T_{g} of less than 550°C.

38. Alkali-, lead- and cadmium-free ceramic color according to at least one of the preceding claims 31 to 37, **characterized in that** the ceramic color has a thermal expansion coefficient alpha in the temperature range of 20 to 300°C of less than 6.0*10⁻⁶ K⁻¹, preferably <5.5*10⁻⁶ K⁻¹, more preferably <5.0*10⁻⁶ K⁻¹, particularly preferably in the range of about 3 to about 4.5*10⁻⁶ K⁻¹.

39. Alkali-, lead- and cadmium-free ceramic color according to at least one of the preceding claims 31 to 38, **characterized in that** the material of the carrier substrate is selected such that the smallest possible difference is provided between the thermal expansion coefficient of the glass frit used and the material of the carrier substrate.

40. Alkali-, lead- and cadmium-free ceramic color according to at least one of the preceding claims 31 to 39, **characterized in that** the baking temperature is <750°C, preferably <700°C, more preferably <650°C, in particular <600°C.

41. Alkali-, lead- and cadmium-free ceramic color according to at least one of the preceding claims 31 to 40, **characterized in that** the baking time is set in the range of 3 to 30 minutes, preferably from 5 to 20 minutes, in particular from 10 to 15 minutes.

42. Alkali-, lead- and cadmium-free ceramic color according to claim 41, **characterized in that** the paste is melted to a smooth glass layer during baking.

43. Alkali-, lead- and cadmium-free ceramic color according to at least one of the preceding claims 31 to 42, **characterized in that** a bending of the carrier substrate or a part thereof is carried out simultaneously with the baking of the glass frit.

44. Alkali-, lead- and cadmium-free ceramic color according to at least one of the preceding claims 31 to 43, **characterized in that** the flexural strength of the carrier substrate provided with the ceramic color is at least 20% and up to 50% of the breaking strength of the carrier substrate without ceramic color.

45. Alkali-, lead- and cadmium-free ceramic color according to at least one of the preceding claims 31 to 44, **characterized in that** the layer thickness of the ceramic color is in the range of 5 to 30 µm, preferably from 5 to 20 µm.

## Revendications

1. Fritte de verre exempte d'alcalis, de plomb et de cadmium, en particulier pour la fabrication de peintures céramiques, avec un coefficient de dilatation thermique alpha dans la plage de température de 20 à 300 °C inférieur à 6,5∗10⁻⁶ K⁻¹ et une température de transformation T_{g} < 550 °C, laquelle présente la composition de verre suivante ou en est constituée :
35 à 70 % en moles de ZnO
20 à 38 % en moles de B₂O₃
6 à 20 % en moles de SiO₂
0,1 à 30 % en moles de RO (RO est CuO et/ou MgO)
0 à 20 % en moles de Bi₂O₃
0 à 5 % en moles d'Al₂O₃
0 à 5 % en moles de CoO
0 à 5 % en moles de Fe₂O₃
0 à 10 % en moles de MnO
0 à 5 % en moles de TiO₂
0 à 5 % en moles de ZrO₂
0 à < 6 % en moles de F, de préférence 0 à 5 % en moles de F,
la somme de CoO, Fe₂O₃ et MnO ne dépassant pas 15 % en moles et les frittes de verre exemptes de CuO présentant une teneur en Bi₂O₃ de 0,1 à 20 % en moles ainsi que, le cas échéant, des additifs en quantité appropriée.

2. Fritte de verre exempte d'alcalis, de plomb et de cadmium selon la revendication 1, **caractérisée en ce qu'**elle présente la composition de verre suivante ou en est constituée :
39 à 60 % en moles de ZnO
24 à 28 % en moles de B₂O₃
11 à 15 % en moles de SiO₂
10 à 20 % en moles de CuO
0 à 10 % en moles de Bi₂O₃
0 à 3 % en moles d'Al₂O₃
0 à 2 % en moles de CoO
0 à 2 % en moles de Fe₂O₃
0 à 10 % en moles de MnO,
la somme de CoO, Fe₂O₃ et MnO ne dépassant pas 10 % en moles ainsi que, le cas échéant, des additifs en quantité appropriée.

3. Fritte de verre exempte d'alcalis, de plomb et de cadmium selon la revendication 1, **caractérisée en ce qu'**elle présente la composition de verre suivante ou en est constituée :
39 à 60 % en moles de ZnO
24 à 28 % en moles de B₂O₃
11 à 15 % en moles de SiO₂
5 à 10 % en moles de MgO
4 à 10 % en moles de Bi₂O₃
0 à 3 % en moles d'Al₂O₃
ainsi que, le cas échéant, des additifs en quantité appropriée.

4. Fritte de verre exempte d'alcalis, de plomb et de cadmium selon l'une des revendications 1 à 3, **caractérisée en ce que** la fritte de verre présente un coefficient de dilatation thermique alpha dans la plage de température de 20 à 300 °C inférieur à 6,0∗10⁻⁶ K⁻¹, de préférence < 5,5∗10⁻⁶ K⁻¹, en particulier < 5,0∗10⁻⁶ K⁻¹, tout particulièrement de préférence dans la plage d'environ 3 à environ 4,5∗10⁻⁶ K⁻¹.

5. Fritte de verre exempte d'alcalis, de plomb et de cadmium selon au moins l'une des revendications précédentes 1 à 4, **caractérisée en ce que** la fritte de verre contient des additifs en quantités appropriées choisis parmi des matières de charge telles que l'oxyde d'étain (SnO₂), le spodumène (LiAlSi₂O₆), la pétalite (LiAlSi₄O₁₀), la β-eucryptite (LiAlSiO₄), la cordiérite (Mg₂Al₄Si₅O₁₈), le zircon (ZrSiO₄), le verre de quartz (SiO₂), l'oxyde de niobium (Nb₂O₆) et/ou des vitrocéramiques à faible dilatation du système à trois phases Li₂O-Al₂O₃-SiO₂ avec un coefficient de dilatation thermique alpha dans la plage de température de 20 à 300 °C inférieur à 3,0∗10⁻⁶ K⁻¹, de préférence < 2,5∗10⁻⁶ K⁻¹, plus préférentiellement < 2,0∗10⁻⁶ K⁻¹, particulièrement de préférence < 1,5∗10⁻⁶ K⁻¹, tout particulièrement de préférence dans la plage d'environ 0 à environ 1,0∗10⁻⁶ K⁻¹, qui peuvent contenir d'autres composants tels que Na₂O, K₂O, TiO₂, ZrO₂, Sb₂O₃, BaO, SrO, ZnO, CaO, MgO, B₂O₃, SnO, V₂O₅, P₂O₅, F avec des teneurs < 10 % en moles,
des pigments tels que de l'oxyde de titane (TiO₂), des spinelles, du zircon dopé (ZrSiO₄ : Pr, V, Fe), de la baddeleyite (ZrO₂) et de l'hématite dopée (Fe₂O₃: Cr).

6. Fritte de verre exempte d'alcalis, de plomb et de cadmium selon au moins l'une des revendications précédentes 1 à 5, **caractérisée en ce qu'**elle contient plus de 0 et jusqu'à 30 % en poids d'un ou plusieurs des additifs suivants choisis parmi des matières de charge, constitués par le groupe formé par l'oxyde d'étain (SnO₂), le spodumène (LiAlSi₂O₆), la pétalite (LiAlSi₄O₁₀) et/ou l'oxyde de niobium (Nb₂O₅), pour diminuer la dilatation thermique et augmenter la résistance à la flexion de la fritte de verre.

7. Fritte de verre exempte d'alcalis, de plomb et de cadmium selon au moins l'une des revendications 1 à 5, **caractérisée en ce que** la fritte de verre contient de 0,1 à 30 % en poids d'oxyde de niobium cristallisable (Nb₂O₆) et de 0 à 30 % en poids de pigments pour augmenter la résistance à la flexion.

8. Procédé de fabrication d'une fritte de verre selon l'une des revendications 1 à 7, **caractérisé en ce que** la composition de verre de l'une des revendications 1 à 7 est fondue à une température dans la plage de 1 000 à 1 300 °C, la masse fondue est trempée et le matériau obtenu est broyé.

9. Procédé selon la revendication 8, **caractérisé en ce que** des additifs sont ajoutés avant, pendant ou après le broyage.

10. Utilisation d'une fritte de verre selon l'une des revendications 1 à 7 sous la forme d'une fritte de base pour la fabrication d'une peinture céramique pour la décoration d'un substrat porteur.

11. Utilisation selon la revendication 10, **caractérisé en ce que** l'on utilise une fritte de base précolorée.

12. Utilisation selon la revendication 11, **caractérisée en ce qu'**une peinture céramique noire est fabriquée en ajoutant à la fritte de verre des pigments dans une quantité de 5 à 30 % en poids.

13. Utilisation selon au moins l'une des revendications précédentes 10 à 12, **caractérisée en ce que** l'on utilise une fritte de base cristallisable.

14. Utilisation selon au moins l'une des revendications précédentes 10 à 13, **caractérisée en ce que** l'on utilise du verre et/ou de la vitrocéramique, en particulier à base de verre borosilicaté, comme substrat porteur.

15. Utilisation selon au moins l'une des revendications précédentes 10 à 14, **caractérisée en ce que** le matériau du substrat porteur est choisi de telle sorte que la différence entre les coefficients de dilatation thermique de la fritte de verre utilisée et du matériau du substrat porteur soit aussi faible que possible.

16. Utilisation selon au moins l'une des revendications précédentes 10 à 15, **caractérisée en ce que** le matériau du substrat porteur, la composition de la fritte de verre et la peinture céramique présentent chacun un faible coefficient de dilatation thermique alpha dans la plage de température de 20 à 300 °C, de préférence alpha < 6,5∗10⁻⁶ K⁻¹, plus préférentiellement < 6,0∗10⁻⁶ K⁻¹, encore plus préférentiellement < 5,5∗10⁻⁶ K⁻¹, particulièrement de préférence < 5,0∗10⁻⁶ K⁻¹, tout particulièrement de préférence dans la plage d'environ 3 à environ 4,5∗10⁻⁶ K⁻¹.

17. Utilisation selon au moins l'une des revendications précédentes 10 à 16, **caractérisée en ce que** l'on utilise comme substrat porteur un substrat porteur plié ou à plier.

18. Utilisation selon la revendication 17, **caractérisée en ce que** le substrat porteur est plié pendant la fabrication de la peinture céramique.

19. Procédé de fabrication d'une peinture céramique à partir d'une fritte de verre selon l'une des revendications 1 à 7, comprenant les étapes consistant à :
(a) fournir une fritte de verre sous la forme d'une poudre qui présente une composition de verre selon l'une des revendications 1 à 7 ou en est constituée ;
b) fabriquer une pâte à partir de la poudre en utilisant un agent de suspension ;
c) appliquer la pâte sur un substrat porteur ; et
d) cuire la pâte sur le substrat porteur.

20. Procédé selon la revendication 19, **caractérisé en ce que** l'agent de suspension est choisi parmi l'huile de sérigraphie, la cire de sérigraphie ou d'autres milieux thixotropes.

21. Procédé selon la revendication 19 ou 20, **caractérisé en ce que** la mise en pâte de la poudre est effectuée avec un rapport poudre : agent de suspension de 5 : 1 à 3 : 2, de préférence de 2 : 1.

22. Procédé selon la revendication 19, **caractérisé en ce que** la pâte est appliquée par sérigraphie.

23. Procédé selon au moins l'une des revendications précédentes 19 à 22, **caractérisé en ce que** les additifs sont choisis parmi des matières de charge telles que l'oxyde d'étain (SnO₂), le spodumène (LiAlSi₂O₆), la pétalite (LiAlSi₄O₁₀), la β-eucryptite (LiAlSiO₄), la cordiérite (Mg₂Al₄Si₅O₁₈), l'oxyde de niobium (Nb₂O₅), le zircon (ZrSiO₄), le verre de quartz (SiO₂) et/ou des vitrocéramiques à faible dilatation du système à trois phases Li₂O-Al₂O₃-SiO₂ avec un coefficient de dilatation thermique alpha dans la plage de température de 20 à 300 °C inférieur à 3,0∗10⁻⁶ K⁻¹, de préférence < 2,5∗10⁻⁶ K⁻¹, plus préférentiellement < 2,0∗10⁻⁶ K⁻¹, particulièrement de préférence < 1,5∗10⁻⁶ K⁻¹, tout particulièrement de préférence dans la plage d'environ 0 à environ 1,0∗10⁻⁶ K⁻¹, qui peuvent contenir d'autres composants tels que Na₂O, K₂O, TiO₂, ZrO₂, Sb₂O₃, BaO, SrO, ZnO, CaO, MgO, B₂O₃, SnO, V₂O₅, P₂O₅, F avec des teneurs < 10 % en moles,
des pigments tels que de l'oxyde de titane (TiO₂), des spinelles, du zircon dopé (ZrSiO₄ : Pr, V, Fe), de la baddeleyite (ZrO₂) et de l'hématite dopée (Fe₂O₃: Cr).

24. Procédé selon au moins l'une des revendications précédentes 19 à 23, **caractérisé en ce que** le substrat porteur est choisi parmi le verre et/ou la vitrocéramique, en particulier à base de verre borosilicaté.

25. Procédé selon la revendication 24, **caractérisé en ce que** l'on choisit un substrat porteur en verre et/ou vitrocéramique avec un faible coefficient de dilatation thermique alpha dans la plage de température de 20 à 300 °C, de préférence alpha < 6,5∗10⁻⁶ K⁻¹, plus préférentiellement < 6,0∗10⁻⁶ K⁻¹, encore plus préférentiellement < 5,5∗10⁻⁶ K⁻¹, particulièrement de préférence < 5,0∗10⁻⁶ K⁻¹, tout particulièrement de préférence dans la plage d'environ 3 à environ 4,5∗10⁻⁶ K⁻¹.

26. Procédé selon au moins l'une des revendications précédentes 19 à 25, **caractérisé en ce que** le matériau du substrat porteur est choisi de telle sorte que la différence entre les coefficients de dilatation thermique de la fritte de verre utilisée et du matériau du substrat porteur soit aussi faible que possible.

27. Procédé selon au moins l'une des revendications précédentes 19 à 26, **caractérisé en ce que** l'on choisit une température de cuisson < 750 °C, de préférence < 700 °C, plus préférentiellement < 650 °C, en particulier < 600 °C.

28. Procédé selon au moins l'une des revendications précédentes 19 à 27, **caractérisé en ce que** le temps de cuisson est réglé dans la plage de 3 à 30 min, de préférence de 5 à 20 min, en particulier de 10 à 15 min.

29. Procédé selon au moins l'une des revendications précédentes 19 à 28, **caractérisé en ce que**, pendant la cuisson, la pâte est fondue en une couche de verre lisse.

30. Procédé selon au moins l'une des revendications précédentes 19 à 29, **caractérisé en ce qu'**un pliage du substrat porteur ou d'une partie de celui-ci est effectué en même temps que la cuisson de la fritte de verre.

31. Peinture céramique exempte d'alcalis, de plomb et de cadmium, pouvant être obtenue par un procédé comprenant les étapes consistant à :
(a) fournir une fritte de verre sous la forme d'une poudre qui présente une composition de verre selon l'une des revendications 1 à 7 ou en est constituée ;
b) fabriquer une pâte à partir de la poudre en utilisant un agent de suspension ;
c) appliquer la pâte sur un substrat porteur ; et
d) cuire la pâte sur le substrat porteur.

32. Peinture céramique exempte d'alcalis, de plomb et de cadmium, selon la revendication 31, **caractérisée en ce que** l'agent de suspension est choisi parmi l'huile de sérigraphie, la cire de sérigraphie ou d'autres milieux thixotropes.

33. Peinture céramique exempte d'alcalis, de plomb et de cadmium selon la revendication 31 ou 32, **caractérisée en ce que** la mise en pâte de la poudre est effectuée avec un rapport poudre : agent de suspension de 5 : 1 à 3 : 2, de préférence de 2 : 1.

34. Peinture céramique exempte d'alcalis, de plomb et de cadmium selon la revendication 33, **caractérisée en ce que** la pâte est appliquée par sérigraphie.

35. Peinture céramique exempte d'alcalis, de plomb et de cadmium selon au moins l'une des revendications précédentes 31 à 34, **caractérisée en ce que** le substrat porteur est choisi parmi le verre ou la vitrocéramique, en particulier à base de verre borosilicaté.

36. Peinture céramique exempte d'alcalis, de plomb et de cadmium selon au moins l'une des revendications précédentes 31 à 35, **caractérisée en ce que** l'on choisit un substrat support en verre et/ou vitrocéramique avec un faible coefficient de dilatation thermique alpha dans la plage de température de 20 à 300 °C, de préférence alpha < 6,5∗10⁻⁶ K⁻¹, plus préférentiellement < 6,0∗10⁻⁶ K⁻¹, encore plus préférentiellement < 5,5∗10⁻⁶ K⁻¹, particulièrement de préférence < 5,0∗10⁻⁶ K⁻¹, tout particulièrement de préférence dans la plage d'environ 3 à environ 4,5∗10⁻⁶ K⁻¹.

37. Peinture céramique exempte d'alcalis, de plomb et de cadmium selon au moins l'une des revendications précédentes 31 à 36, **caractérisée en ce que** la peinture céramique présente un coefficient de dilatation thermique alpha dans la plage de température de 20 à 300 °C inférieur à 6,5∗10⁻⁶ K⁻¹ et une température de transformation T_{g} inférieure à 550 °C.

38. Peinture céramique exempte d'alcalis, de plomb et de cadmium selon au moins l'une des revendications précédentes 31 à 37, **caractérisée en ce que** la peinture céramique présente un coefficient de dilatation thermique alpha dans la plage de température de 20 à 300 °C inférieur à 6,0∗10⁻⁶ K⁻¹, de préférence < 5,5∗10⁻⁶ K⁻¹, particulièrement de préférence < 5,0∗10⁻⁶ K⁻¹, tout particulièrement de préférence dans la plage d'environ 3 à environ 4,5∗10⁻⁶ K⁻¹.

39. Peinture céramique exempte d'alcalis, de plomb et de cadmium selon au moins l'une des revendications précédentes 31 à 38, **caractérisée en ce que** le matériau du substrat porteur est choisi de telle sorte que la différence entre les coefficients de dilatation thermique de la fritte de verre utilisée et du matériau du substrat porteur soit aussi faible que possible.

40. Peinture céramique exempte d'alcalis, de plomb et de cadmium selon au moins l'une des revendications précédentes 31 à 39, **caractérisée en ce que** la température de cuisson est < 750 °C, de préférence < 700 °C, plus préférentiellement < 650 °C, en particulier < 600 °C.

41. Peinture céramique exempte d'alcalis, de plomb et de cadmium selon au moins l'une des revendications précédentes 31 à 40, **caractérisée en ce que** le temps de cuisson est réglé dans la plage de 3 à 30 min, de préférence de 5 à 20 min, en particulier de 10 à 15 min.

42. Peinture céramique exempte d'alcalis, de plomb et de cadmium selon la revendication 41, **caractérisée en ce que**, pendant la cuisson, la pâte est fondue en une couche de verre lisse.

43. Peinture céramique exempte d'alcalis, de plomb et de cadmium selon au moins l'une des revendications précédentes 31 à 42, **caractérisée en ce qu'**un pliage du substrat porteur ou d'une partie de celui-ci est effectué en même temps que la cuisson de la fritte de verre.

44. Peinture céramique exempte d'alcalis, de plomb et de cadmium selon au moins l'une des revendications précédentes 31 à 43, **caractérisée en ce que** la résistance à la flexion du substrat porteur pourvu de la peinture céramique est d'au moins 20 % et jusqu'à 50 % de la résistance à la flexion du substrat porteur dépourvu de la peinture céramique.

45. Peinture céramique exempte d'alcalis, de plomb et de cadmium selon au moins l'une des revendications précédentes 31 à 44, **caractérisée en ce que** l'épaisseur de couche de la peinture céramique se situe dans la plage de 5 à 30 µm, de préférence de 5 à 20 µm.
